(19) Europäisches Patentamt
European Patent Office
Office européen des brevets

(11) **EP 4 535 448 A1**

(12) **EUROPEAN PATENT APPLICATION**
published in accordance with Art. 153(4) EPC

(43) Date of publication:
09.04.2025 Bulletin 2025/15

(51) International Patent Classification (IPC):
$H01M\ 4/13^{(2010.01)}$        $H01M\ 4/62^{(2006.01)}$
$H01M\ 10/052^{(2010.01)}$    $H01M\ 10/0562^{(2010.01)}$

(21) Application number: 23816116.0

(22) Date of filing: 31.05.2023

(52) Cooperative Patent Classification (CPC):
H01M 4/13; H01M 4/62; H01M 10/052;
H01M 10/0562

(86) International application number:
PCT/JP2023/020303

(87) International publication number:
WO 2023/234359 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.06.2022 JP 2022089968

(71) Applicant: FUJIFILM Corporation
Tokyo 106-8620 (JP)

(72) Inventor: KINOSHITA, Ikuo
Ashigarakami-gun, Kanagawa 258-8577 (JP)

(74) Representative: HGF
HGF Limited
1 City Walk
Leeds LS11 9DX (GB)

(54) **ELECTRODE COMPOSITION FOR ALL-SOLID-STATE SECONDARY BATTERY, ELECTRODE SHEET FOR ALL-SOLID-STATE SECONDARY BATTERY, ALL-SOLID-STATE SECONDARY BATTERY, AND METHODS FOR PRODUCING ELECTRODE SHEET FOR ALL-SOLID-STATE SECONDARY BATTERY AND PRODUCING ALL-SOLID-STATE SECONDARY BATTERY**

(57)    Provided are an electrode composition for an all-solid-state secondary battery, containing an amorphous solid electrolyte and an active material, in which the solid electrolyte contains a metal-containing oxide containing at least one of an alkali metal element or an alkaline earth metal element and an oxygen element, at least one metal salt of an alkali metal salt or an alkaline earth metal salt, and water, and a ratio of a median diameter M of the active material to a median diameter N of the solid electrolyte is $0.05 \leq M/N < 1.2$; an electrode sheet for an all-solid-state secondary battery and an all-solid-state secondary battery using the same; and a manufacturing method thereof.

## FIG. 1

**Description**

**BACKGROUND OF THE INVENTION**

1. Field of the Invention

The present invention relates to an electrode composition for an all-solid-state secondary battery, an electrode sheet for an all-solid-state secondary battery, an all-solid-state secondary battery, a manufacturing method of an electrode sheet for an all-solid-state secondary battery, and a manufacturing method of an all-solid-state secondary battery.

2. Description of the Related Art

In the related art, an organic solvent having high ion conductivity has been used as an electrolyte in a lithium ion secondary battery. However, since the organic solvent is flammable, there is a problem in safety. In addition, since the organic solvent is liquid, it is difficult to make the battery compact, and there is also a problem of limitation on capacity in a case where the battery is large.

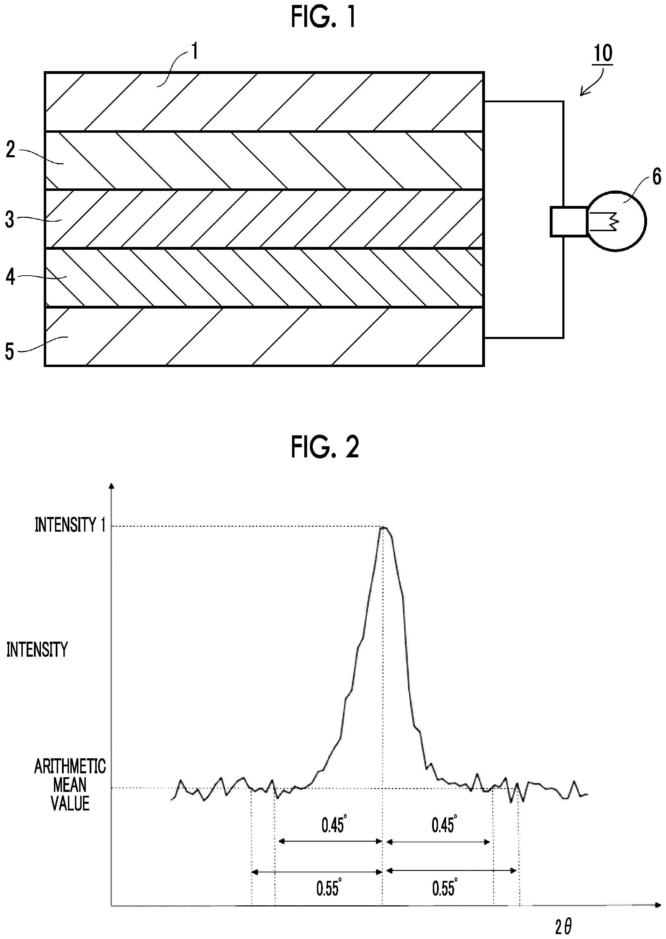

On the other hand, an all-solid-state secondary battery such as an all-solid-state lithium ion secondary battery is one of the next-generation batteries which can solve these problems. Fig. 1 shows a basic configuration of the all-solid-state lithium ion secondary battery which is one aspect of the all-solid-state secondary battery. An all-solid-state lithium ion secondary battery 10 includes a negative electrode collector layer 1, a negative electrode active material layer 2, a solid electrolyte layer 3, a positive electrode active material layer 4, and a positive electrode collector layer 5 in this order as viewed from the negative electrode side. The respective layers are in contact with each other to form an adjacent structure. By adopting such a structure, during charging, electrons (e$^-$) are supplied to the negative electrode side, and lithium ions (Li$^+$) which have moved through the solid electrolyte layer 3 are accumulated in the negative electrode. On the other hand, during discharging, lithium ions (Li$^+$) accumulated in the negative electrode are returned to the positive electrode side through the solid electrolyte layer 3, and electrons are supplied to an operation portion 6. In the illustrated example, an electric bulb is employed as a model of the operation portion 6, and is lit by the discharging.

As described above, in the all-solid-state lithium ion secondary battery, in order to obtain desired charging and discharging characteristics, the solid electrolyte layer is required to have excellent lithium ion conductivity.

As a solid electrolyte constituting the solid electrolyte layer, a sulfide-based solid electrolyte or an oxide-based solid electrolyte is mainly used.

Since the sulfide-based solid electrolyte is soft and plastically deformed, particles are bonded only by pressure molding. Therefore, the sulfide-based solid electrolyte has a low interface resistance between particles and excellent ion conductivity. However, the sulfide-based solid electrolyte has a problem in that it reacts with water to generate toxic hydrogen sulfide.

On the other hand, the oxide-based solid electrolyte has an advantage of high safety. However, the oxide-based solid electrolyte is hard and is not easily plastically deformed. In order to improve bonding property between particles of the oxide-based solid electrolyte, a high-temperature sintering treatment is required, which is restricted from the viewpoint of production efficiency of the battery, energy cost, and the like. For example, JP2018-052755A discloses a solid electrolyte formed of a lithium-containing oxide having a specific element composition, and it discloses that the solid electrolyte exhibits high ion conductivity. However, in order to use the lithium-containing oxide as a solid electrolyte sheet, a high-temperature sintering treatment is required.

As a technique for dealing with the problem, for example, WO2021/193204A discloses a composite body containing a lithium compound having a lithium ion conductivity of $1.0 \times 10^{-6}$ S/cm or more at 25°C, and lithium tetraborate in which a reduced pair distribution function G(r) obtained from an X-ray total scattering measurement exhibits a specific profile. According to the technique disclosed in WO2021/193204A, even though the composite body is composed of a lithium-containing oxide, since lithium tetraborate acts as a bond between lithium compounds by plastic deformation, it is possible to form a lithium ion conductor exhibiting excellent lithium ion conductivity by a pressurization treatment, without performing the high-temperature sintering treatment.

In the all-solid-state secondary battery, the positive electrode active material layer and the negative electrode active material layer (collectively, also simply referred to as "active material layer") generally contain a powdery solid electrolyte and an active material. This active material layer is generally prepared by preparing a particle dispersion liquid (slurry) containing a solid electrolyte, an active material, and a dispersion medium (for example, water), applying the slurry, and drying the slurry. JP2015-022960A discloses a slurry for an electrode, prepared from at least electrolyte particles, active material particles, and a dispersion medium, in which a ratio (Db/Da) of a median diameter (Db) of the active material particles to a median diameter (Da) of the electrolyte particles is in a range of 0.1 to 1.0. It can be said that an electrode having both high electron conductivity and high ion conductivity can be obtained by using the slurry for an electrode. The electrolyte particles (solid electrolyte) contained in the electrode slurry disclosed in JP2015-022960A do not contain water in the solid electrolyte.

## SUMMARY OF THE INVENTION

In the preparation of the active material layer, it is preferable that an amount of the dispersion medium in the above-described slurry can be reduced from the viewpoint that drying can be efficiently performed and a production time can be shortened. On the other hand, in a case where the amount of the dispersion medium in the slurry is reduced (a concentration of the solid contents in the slurry is increased), there is a problem that aggregation of solid particles such as a solid electrolyte and an active material is likely to occur and uniform dispersion is difficult. Furthermore, in a case where a slurry having deteriorated dispersibility is used, in a case of forming the active material layer, sufficient flexibility cannot be obtained, and thus cracking, peeling, and the like of the active material layer are likely to occur, which impairs handleability (decreased yield), and sufficient performance cannot be obtained in a case of being incorporated into a battery.

An object of the present invention is to provide an electrode composition for an all-solid-state secondary battery, with which it is possible to prepare a high-concentration slurry having excellent dispersion stability of solid particles and in which an active material layer to be formed has excellent flexibility. Another object of the present invention is to provide an electrode sheet for an all-solid-state secondary battery and an all-solid-state secondary battery, using the above-described electrode composition for an all-solid-state battery. Still another object of the present invention is to provide a manufacturing method the electrode sheet for an all-solid-state secondary battery and the all-solid-state secondary battery.

The object of the present invention has been achieved by the following methods.

[1] An electrode composition for an all-solid-state secondary battery, comprising:

an amorphous solid electrolyte; and
an active material,
in which the solid electrolyte contains a metal-containing oxide containing at least one of an alkali metal element or an alkaline earth metal element and an oxygen element, at least one metal salt of an alkali metal salt or an alkaline earth metal salt, and water, and
a ratio of a median diameter M of the active material to a median diameter N of the solid electrolyte is $0.05 \leq M/N < 1.2$.

[2] The electrode composition for an all-solid-state secondary battery according to [1],

in which the metal-containing oxide is a lithium-containing oxide containing Li, B, and O, and
the metal salt is a lithium salt.

[3] The electrode composition for an all-solid-state secondary battery according to [1] or [2],
in which the median diameter N of the solid electrolyte is 5 to 50 $\mu$m.
[4] The electrode composition for an all-solid-state secondary battery according to any one of [1] to [3],
in which, in the electrode composition for an all-solid-state secondary battery, a ratio of a content of the active material and a content of the solid electrolyte is the solid electrolyte:the active material = 20:80 to 80:20 in terms of a mass ratio.
[5] The electrode composition for an all-solid-state secondary battery according to any one of [1] to [4],
in which, in the solid electrolyte, a value of a ratio of a content of the water to a content of the metal-containing oxide is 1 to 12 in terms of a molar ratio.
[6] The electrode composition for an all-solid-state secondary battery according to any one of [1] to [5],
in which, in the solid electrolyte, a value of a ratio of a content of the metal salt to a content of the metal-containing oxide is 0.001 to 1.5 in terms of a molar ratio.
[7] An electrode sheet for an all-solid-state secondary battery, comprising:
an active material layer formed of the electrode composition for an all-solid-state secondary battery according to any one of [1] to [6].
[8] An all-solid-state secondary battery comprising, in the following order:

a positive electrode active material layer;
a solid electrolyte layer; and
a negative electrode active material layer,
wherein at least one of the positive electrode active material layer or the negative electrode active material layer is an active material layer formed of the electrode composition for an all-solid-state secondary battery according to any one of [1] to [6].

[9] A manufacturing method of an electrode sheet for an all-solid-state secondary battery, comprising:
forming an active material layer using the electrode composition for an all-solid-state secondary battery according to any one of [1] to [6].

[10] A manufacturing method of an all-solid-state secondary battery in which a positive electrode active material layer, a solid electrolyte layer, and a negative electrode active material layer are arranged in this order, the manufacturing method comprising:
forming at least one of the positive electrode active material layer or the negative electrode active material layer using the electrode composition for an all-solid-state secondary battery according to any one of [1] to [6].

In the present invention or the specification, any numerical range expressed using "to" refers to a range including the numerical values before and after the "to" as a lower limit value and an upper limit value, respectively.

With the electrode composition for an all-solid-state secondary battery according to the aspect of the present invention, it is possible to form an active material layer having excellent dispersion stability of a dispersoid and being less likely to be cracked or peeled off, even with a high-concentration slurry. Therefore, in a case of being used for manufacturing an electrode sheet for an all-solid-state secondary battery and for manufacturing an all-solid state secondary battery, a drying step can be shortened, and productivity can be further improved. An all-solid-state secondary battery including an active material layer formed of the electrode composition for an all-solid-state secondary battery has small energy loss, and thus longer life can be achieved. With the manufacturing method of an electrode sheet for an all-solid-state secondary battery according to the aspect of the present invention, it is possible to obtain the above-described electrode sheet for an all-solid-state secondary battery according to the aspect of the present invention. Furthermore, with the manufacturing method of an all-solid-state secondary battery according to the aspect of the present invention, it is possible to obtain the above-described all-solid-state secondary battery according to the aspect of the present invention.

## BRIEF DESCRIPTION OF THE DRAWINGS

Fig. 1 is a cross-sectional view schematically showing an example of a configuration of an all-solid-state lithium ion secondary battery.

Fig. 2 is a diagram showing an example of an X-ray diffraction pattern for describing X-ray diffraction characteristics of a solid electrolyte (II) used in the present invention.

Fig. 3 is a diagram showing an example of a reduced pair distribution function G(r) obtained from an X-ray total scattering measurement of the solid electrolyte (II) used in the present invention.

Fig. 4 is a diagram showing an example of a spectrum obtained in a case where a solid $^7$Li-NMR measurement of the solid electrolyte (II) used in the present invention is performed at 20°C or 120°C.

Fig. 5 is a diagram showing an example of a spectrum obtained in a case where a solid $^7$Li-NMR measurement of a lithium tetraborate crystal is performed at 20°C or 120°C.

Fig. 6 is a diagram showing an example of a spectrum obtained in a case where a solid $^7$Li-NMR measurement of the solid electrolyte (II) used in the present invention is performed at 20°C.

Fig. 7 is a diagram in which a peak shown in Fig. 6 is waveform-separated.

Fig. 8 is a diagram showing an example of a Raman spectrum of the solid electrolyte (II) used in the present invention.

Fig. 9 is a diagram showing a Raman spectrum of a lithium tetraborate crystal.

Fig. 10 is a diagram showing a reduced pair distribution function G(r) obtained by an X-ray total scattering measurement of powdery $Li_2B_4O_7$ crystals.

Fig. 11 is a diagram showing an X-ray diffraction pattern of powdery $Li_2B_4O_7$ crystals.

## DESCRIPTION OF THE PREFERRED EMBODIMENTS

[Electrode composition for all-solid-state secondary battery]

The electrode composition for an all-solid-state secondary battery according to the embodiment of the present invention (hereinafter, also referred to as "electrode composition according to the embodiment of the present invention") contains an amorphous solid electrolyte and an active material. The solid electrolyte is an electrolyte in a form of solid particles, which contains a metal-containing oxide containing at least one of an alkali metal element or an alkaline earth metal element and an oxygen element, at least one of an alkali metal salt or an alkaline earth metal salt, and water. In the electrode composition according to the embodiment of the present invention, a ratio (M/N) of a median diameter M of the active material to a median diameter N of the solid electrolyte is controlled to $0.05 \leq M/N < 1.2$.

The electrode composition according to the embodiment of the present invention can be suitably used for forming an active material layer in an all-solid-state secondary battery.

In the electrode composition according to the embodiment of the present invention, the solid electrolyte has a specific composition and is in an amorphous state, and thus exhibits high flexibility which is relatively likely to be plastically deformed. Furthermore, by controlling the relationship between the median diameters of the solid electrolyte and the active material such that the above-described ratio is satisfied, the electrode composition according to the embodiment of the present invention has excellent stability of a dispersoid even with a high-concentration slurry, and in an active material layer to be formed, the solid electrolyte can also act as a binder to improve adhesiveness between the solid particles, and thus the flexibility can be further improved. As described above, by using the electrode composition according to the embodiment of the present invention, it is possible to form an active material layer having high flexibility even in a case where a sulfide-based solid electrolyte is not used as the solid electrolyte and even in a case where a binder such as an organic polymer is not used.

The above-described ratio M/N is preferably $0.1 \leq M/N \leq 1.1$, more preferably $0.3 \leq M/N \leq 1.0$, still more preferably $0.4 \leq M/N \leq 0.8$, and particularly preferably $0.45 \leq M/N \leq 0.7$.

In the electrode composition according to the embodiment of the present invention, a ratio of a content of the solid electrolyte and a content of the active material is preferably 20:80 to 80:20, more preferably 20:80 to 50:50, and still more preferably 25:75 to 40:60 in terms of a mass ratio. The ratio can be solid electrolyte:active material = 40:60 to 60:40.

<Solid electrolyte>

The solid electrolyte constituting the electrode composition according to the embodiment of the present invention is in an amorphous state (synonymous with a non-crystalline state), and contains a metal-containing oxide containing at least one of an alkali metal element or an alkaline earth metal element, and an oxygen element, at least one of an alkali metal salt or an alkaline earth metal salt, and water (hereinafter, this solid electrolyte is also referred to as "solid electrolyte (I)"). The solid electrolyte (I) is usually an inorganic solid electrolyte.

The solid electrolyte (I) is in an amorphous state, and exhibits an elastic characteristic that is likely to be plastically deformed. As a result, in a layer containing the solid electrolyte (I) which is formed by a pressurization treatment or the like, adhesiveness between the solid electrolytes (I) and/or adhesiveness between the solid electrolyte (I) and a component (for example, an active material) present in other constitutional layers are improved, and an interface resistance can be reduced and more excellent ion conductivity can be obtained. By using the solid electrolyte (I), it is possible to form an ion conductor, a constitutional layer for the all-solid-state secondary battery, which exhibits excellent ion conductivity by a pressurization treatment or the like without performing a high-temperature sintering treatment, even though the solid electrolyte is an oxide-based solid electrolyte having high safety.

In addition, the "amorphous" solid electrolyte (I) means an oxide having a broad scattering band with an apex in a range of 20° to 40° in terms of the $2\theta$ value in case of being measured by an X-ray diffraction method using a CuKα ray, and the oxide may have a crystalline diffraction line.

The median diameter N of the solid electrolyte (I) is not particularly limited as long as the M/N is satisfied, but is preferably 5 to 50 μm, more preferably 5 to 25 μm, and still more preferably 5 to 20 μm. The above-described median diameter (D50) is measured by acquiring a particle image by a flow-type particle image analysis method, calculating a particle size distribution, and analyzing the obtained distribution. The above-described particle size corresponds to a circle-equivalent diameter.

A method of controlling the median diameter is not particularly limited, and for example, the median diameter can be controlled by refining particles by a mechanical milling treatment described later, and classifying the particles by sieving.

-Water-

The above-described water contained in the solid electrolyte (I) includes at least bound water. The reason why the solid electrolyte (I) exhibits high lithium ion conductivity is not clear, but it is considered that, in the amorphous solid electrolyte (I), a soft hydrated layer is easily formed on a surface of the metal-containing oxide, and a large amount of metal derived from the metal salt is contained in the hydrated layer, and as a result, the ion conductivity is further enhanced.

Here, in the present invention or the specification, the "bound water" means water other than water present as free water or an OH group bonded to the metal-containing oxide. The solid electrolyte (II) is in a state of solid particles (including a state in which the solid particles are bonded to each other) even in a case of containing water, and functions as a solid electrolyte of the all-solid-state secondary battery. That is, the solid electrolyte (I) contains the bound water which is not removed or is difficult to be removed under normal drying conditions. In a case where the solid electrolyte (I) functions as a solid electrolyte of the all-solid-state secondary battery in the state of solid particles (a state in which the solid particles can be handled as a powder), the solid electrolyte (I) may contain free water. That is, in the present invention, the "electrode composition" includes a form in which the solid electrolyte contains water as long as the solid electrolyte can be handled as the solid particles (solid powder). In addition, for example, a solid electrolyte (I) in which a value of a ratio of the content of water to a content of the metal-containing oxide is 12 or less in terms of a molar ratio, which will be described later, is not in any of a paste state or a gel state, but is in the state of solid particles (solid powder).

In the solid electrolyte (I), from the viewpoint of further enhancing the ionic conductivity, the value of the ratio of the content of the water to the content of the metal-containing oxide (water/metal-containing oxide) is preferably controlled to 1 to 12, more preferably controlled to 2 to 12, and still more preferably controlled to 3 to 11 in terms of a molar ratio. In addition, the molar ratio is also preferably 2 to 10, 2 to 8, 2 to 7, or 3 to 7.

-Metal-containing oxide-

Examples of the alkali metal element or the alkaline earth metal element, contained in the metal-containing oxide, include Li, Na, K, Rb, Cs, Fr, Ca, Sr, Ba, and Ra; and Li or Na is preferable and Li is more preferable.

The metal-containing oxide preferably further contains a typical element other than the at least one of the alkali metal element or the alkaline earth metal element, and the oxygen element. Examples of the typical element include B, C, N, F, Si, P, S, Cl, As, Se, Br, Te, and I; and B is preferable.

A preferred aspect of the metal-containing oxide is a lithium-containing oxide containing Li, B, and O (hereinafter, also simply referred to as "lithium-containing oxide").

-Alkali metal salt and alkaline earth metal salt-

The alkali metal salt and the alkaline earth metal salt (hereinafter, also referred to as a metal salt) are not particularly limited as long as they are a salt of an alkali metal or an alkaline earth metal. Examples of the salt of an alkali metal or an alkaline earth metal include a salt composed of an alkali metal cation or an alkaline earth metal cation, and an anion.

Examples of the alkali metal of the alkali metal salt and the alkaline earth metal of the alkaline earth metal salt include Li, Na, K, Rb, Cs, Fr, Ca, Sr, Ba, and Ra; and Li or Na is preferable and Li is more preferable. The alkali metal element or the alkaline earth metal element in the above-described metal-containing oxide contained in the electrode composition according to the embodiment of the present invention, and the alkali metal element or the alkaline earth metal element in the above-described metal salt contained in the electrode composition according to the embodiment of the present invention may be the same as or different from each other.

The alkali metal of the alkali metal salt and the anion of the alkaline earth metal salt are preferably an organic anion, and more preferably an organic anion having a halogen atom. Specific examples of the anion include $Cl^-$, $Br^-$, $I^-$, $SO_4^{2-}$, $NO_3^-$, $CO_3^{2-}$, $CH_3COO^-$, $PF_6^-$, $BF_4^-$, $AsF_6^-$, $SbF_6^-$, $ClO_4^-$, $BrO_4^-$, $IO_4^-$, $AlCl_4^-$, $CF_3SO_3^-$, $(CF_3SO_2)_2N^-$, $(CF_3CF_2SO_2)_2N^-$, $(FSO_2)_2N^-$, $(CF_3SO_2)(C_4F_9SO_2)N^-$, $(CF_3SO_2)_3C^-$, $[PF_5(CF_2CF_2CF_3)]^-$, $[PF_4(CF_2CF_2CF_3)_2^-]$, $[PF_3(CF_2CF_2CF_3)_3]^-$, $[PF_5(CF_2CF_2CF_2CF_3)]^-$, $[PF_4(CF_2CF_2CF_2CF_3)_2]^-$, $[PF_3(CF_2CF_2CF_2CF_3)_3]^-$, a bis(oxalato)borate anion, and a difluorooxalatoborate anion; and $Br^-$, $I^-$, $CF_3SO_3^-$, $(CF_3SO_2)_2N^-$, $(CF_3CF_2SO_2)_2N^-$, $(FSO_2)_2N^-$, $(CF_3SO_2)(C_4F_9SO_2)N^-$, $(CF_3SO_2)_3C^-$, $[PF_5(CF_2CF_2CF_3)]^-$, $[PF_4(CF_2CF_2CF_3)_2^-]$, $[PF_3(CF_2CF_2CF_3)_3]^-$, $[PF_5(CF_2CF_2CF_2CF_3)]^-$, $[PF_4(CF_2CF_2CF_2CF_3)_2]^-$, or $[PF_3(CF_2CF_2CF_2CF_3)_3]^-$ is preferable, and $(CF_3SO_2)_2N^-$, $(CF_3CF_2SO_2)_2N^-$, $(FSO_2)_2N^-$, or $(CF_3SO_2)(C_4F_9SO_2)N^-$ is more preferable.

In the solid electrolyte (I), a value of a ratio of a content of the above-described metal salt to a content of the above-described metal-containing oxide (metal salt/metal-containing oxide) is preferably 0.001 to 1.5, more preferably 0.001 to 1.2, still more preferably 0.01 to 1.2, particularly preferably 0.1 to 1.2, and most preferably 0.5 to 1.2 in terms of a molar ratio.

In the above-described solid electrolyte (I), it is preferable that the metal-containing oxide is a lithium-containing oxide containing Li, B, and O, and the metal salt is a lithium salt. The preferred aspect of the solid electrolyte (I) described above is also referred to as a solid electrolyte (II).

Hereinafter, the present invention will be described using an aspect in which the solid electrolyte (II) is used as an example, but the present invention is not limited to the following aspects except as specified in the present invention.

In the present invention, in a case of an "amorphous" solid electrolyte (II), it is preferable that the following X-ray diffraction characteristics are satisfied. That is, in a case where the solid electrolyte (II) satisfies the following X-ray diffraction characteristics, the solid electrolyte (II) is in an "amorphous state".

(X-ray diffraction characteristics)

In an X-ray diffraction pattern of the solid electrolyte (II) obtained from an X-ray diffraction measurement using a $CuK\alpha$ ray, none of a first peak in which a peak top is located in a range where a diffraction $2\theta$ is 21.6° to 22.0° and a full-width at half maximum is 0.65° or less, a second peak in which a peak top is located in a range where a diffraction $2\theta$ is 25.4° to 25.8° and a full-width at half maximum is 0.65° or less, a third peak in which a peak top is located in a range where a diffraction $2\theta$ is 33.4° to 33.8° and a full-width at half maximum is 0.65° or less, and a fourth peak in which a peak top is located in a range where a diffraction $2\theta$ is 34.4° to 34.8° and a full-width at half maximum is 0.65° or less are present.

Alternatively, in the X-ray diffraction pattern, in a case where at least one peak of the first peak, the second peak, the third peak, or the fourth peak described above (hereinafter, referred to as "peak X) is present, an intensity ratio of the at least one peak in the peak X, which is calculated by the following intensity measuring method, is 5.0 or less.

-Intensity measuring method-

An average intensity (Av1) in a range of +0.45° to +0.55° from the diffraction angle 2θ of the peak top of the peak X is calculated and an average intensity (Av2) in a range of -0.55° to -0.45° from the diffraction angle 2θ of the peak X is calculated, and an arithmetic mean value of Av1 and Av2 is calculated. A value of a ratio of a peak intensity at the peak top of the peak X to the arithmetic mean value (peak intensity at peak top of peak X/arithmetic mean value) is defined as the intensity ratio.

The X-ray diffraction characteristics will be described in more detail.

In a case where none of the first peak, the second peak, the third peak, and the fourth peak described above are present in the X-ray diffraction pattern of the solid electrolyte (II) obtained from the X-ray diffraction measurement using a CuKα ray, the above-described X-ray diffraction characteristics are satisfied, and the solid electrolyte (II) is in an amorphous state.

In addition, even though the above-described peak X is present in the X-ray diffraction pattern of the solid electrolyte (II) obtained from the X-ray diffraction measurement using a CuKα ray, in a case where the intensity ratio of the at least one peak in the peak X, which is obtained by the above-described intensity measuring method, satisfies 5.0 or less, the above-described X-ray diffraction characteristics are satisfied, and the solid electrolyte (II) is in an amorphous state.

Here, the full-width at half maximum (FWHM) of the peak means a peak width (°) at a point of 1/2 of the peak intensity at the peak top.

The above-described intensity measuring method will be described in more detail with reference to Fig. 2.

Fig. 2 is a diagram showing an example of the peak X appearing in a diffraction pattern of the solid electrolyte (II) obtained from an X-ray diffraction measurement using a CuKα ray. In the diffraction pattern shown in Fig. 2, a specific peak in which an intensity of a peak top is represented by an intensity 1 is shown. In the intensity measuring method, as shown in Fig. 2, an average intensity (Av1) in a range of +0.45° to +0.55° from the diffraction angle 2θ of the peak top of the peak X is calculated, and an average intensity (Av2) in a range of -0.55° to -0.45° from the diffraction angle 2θ of the peak top of the peak X is calculated. Next, an arithmetic mean value of Av1 and Av2 is calculated, and a value of a ratio of the intensity 1 to the arithmetic mean value is obtained as the intensity ratio. In a case where the above-described X-ray diffraction characteristics are satisfied, it means that the solid electrolyte (II) does not have a crystal structure, or almost does not have a crystal structure and is in an amorphous state.

That is, the above-described first peak to fourth peak are mainly peaks derived from a crystal structure in the solid electrolyte (for example, a crystal structure of lithium tetraborate), and a case where these peaks are not present means that the solid electrolyte is in an amorphous state. In addition, even though at least one of the first peak to the fourth peak is present, a case where the intensity ratio of the at least one peak in the present peaks X is 5.0 or less means that almost no crystal structure which hinders the effect of the present invention is present in the solid electrolyte (II). For example, a peak derived from a specific component (for example, the lithium salt) may overlap with any one of the above-described first peak to fourth peak. However, in the amorphous solid electrolyte, all of the first peak to the fourth peak are usually decreased. Therefore, even in a case where a peak due to the specific component overlap with any one of the first peak to the fourth peak and one large peak appears, it can be said that the presence of at least one peak X in which the intensity ratio is equal to or less than a predetermined value indicates that the solid electrolyte (II) is in an amorphous state.

The above-described X-ray diffraction measurement is performed using a CuKα ray under measurement conditions of 0.01 °/step and 3 °/min.

In the X-ray diffraction pattern of the solid electrolyte (II) obtained from the X-ray diffraction measurement using a CuKα ray, it is preferable that none of the first peak, the second peak, the third peak, and the fourth peak described above is present, or even in a case where at least one peak X of the first peak, the second peak, the third peak, and the fourth peak described above is present, the intensity ratio of the at least one peak in the peak X is 3.0 or less.

Among these, it is more preferable that none of the first peak, the second peak, the third peak, and the fourth peak described above is present, or even in a case where at least one peak X of the first peak, the second peak, the third peak, and the fourth peak described above is present, the intensity ratio of the at least one peak in the peak X is 2.0 or less.

In the above-described X-ray diffraction pattern, in a case where two or more peaks in which a peak top is located in a range of 21.6° to 22.0° and the full-width at half maximum is 0.65° or less are present, a peak having the highest diffracted X-ray intensity is selected as the first peak to determine the above-described X-ray diffraction characteristics.

In addition, in the above-described X-ray diffraction pattern, in a case where two or more peaks in which a peak top is located in a range of 25.4° to 25.8° and the full-width at half maximum is 0.65° or less are present, a peak having the highest diffracted X-ray intensity is selected as the second peak to determine the above-described X-ray diffraction characteristics.

In addition, in the above-described X-ray diffraction pattern, in a case where two or more peaks in which a peak top is located in a range of 33.4° to 33.8° and the full-width at half maximum is 0.65° or less are present, a peak having the highest diffracted X-ray intensity is selected as the third peak to determine the above-described X-ray diffraction characteristics.

In addition, in the above-described X-ray diffraction pattern, in a case where two or more peaks in which a peak top is located in a range of 34.4° to 34.8° and the full-width at half maximum is 0.65° or less are present, a peak having the highest diffracted X-ray intensity is selected as the fourth peak to determine the above-described X-ray diffraction characteristics.

(X-ray total scattering characteristics)

The solid electrolyte (II) preferably satisfies the following requirement A-1 as X-ray total scattering characteristics. In addition, in a case where the solid electrolyte (II) satisfies the above-described X-ray diffraction characteristics, the solid electrolyte (II) generally satisfies the following requirement A-2.

-Requirement A-1-

In a reduced pair distribution function G(r) of the solid electrolyte (II) obtained from an X-ray total scattering measurement, a first peak in which a peak top is located in a range where r is 1.43 ± 0.2 Å and a second peak in which a peak top is located in a range where r is 2.40 ± 0.2 Å are present, G(r) of the peak top of the first peak is more than 1.0, and G(r) of the peak top of the second peak is 0.8 or more.

-Requirement A-2-

In the reduced pair distribution function G(r) of the solid electrolyte (II) obtained from an X-ray total scattering measurement, an absolute value of G(r) in a range where r is more than 5 Å and 10 Å or less is less than 1.0.

In a case where the solid electrolyte (II) satisfies the requirement A-1 and the requirement A-2, the solid electrolyte (II) has a short-range ordered structure related to interatomic distances of B-O and B-B, but has almost no long-range ordered structure. Therefore, the oxide solid electrolyte itself exhibits an elastic characteristic of being softer and more easily plastically deformable than the lithium-containing oxide in the related art. As a result, in a layer containing the solid electrolyte (II), which is formed by a pressurization treatment or the like, it is presumed that adhesiveness between the solid electrolytes (I) and/or adhesiveness between the solid electrolyte (II) and other ion conductors (for example, an active material) is improved, so that an interface resistance can be reduced and more excellent ion conductivity can be obtained.

The requirement A-1 and the requirement A-2 will be described in more detail with reference to the drawings.

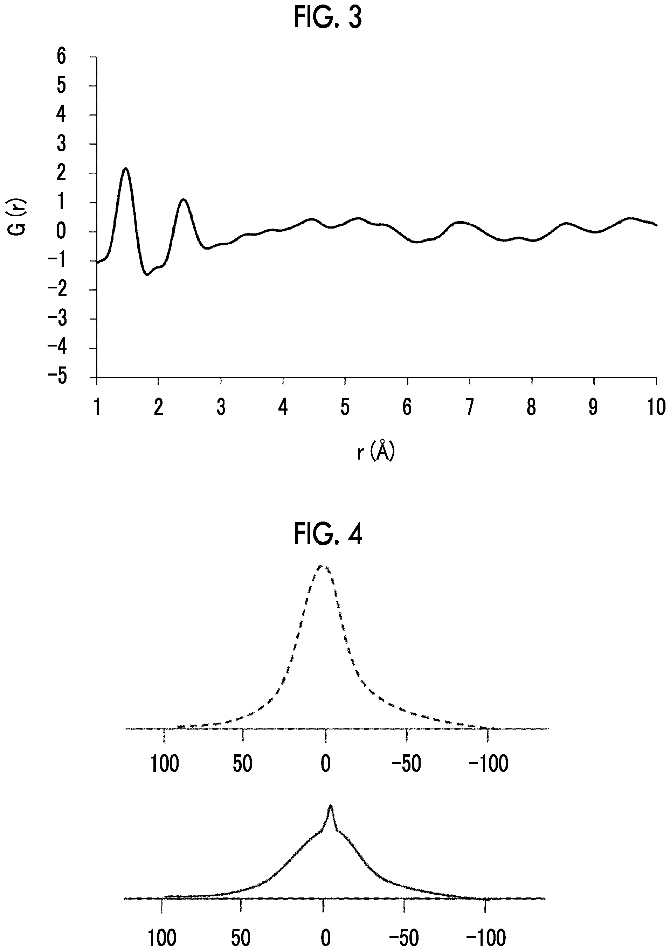

Fig. 3 shows an example of the reduced pair distribution function G(r) of the solid electrolyte (II) obtained by an X-ray total scattering measurement. A vertical axis of Fig. 3 is a reduced pair distribution function obtained by subjecting X-ray scattering to Fourier transform, and it indicates the probability that an atom is present at a position of a distance r. The X-ray total scattering measurement can be performed using SPring-8 BL04B2 (acceleration voltage: 61.4 keV, wavelength: 0.2019 Å). The reduced pair distribution function G(r) is obtained by converting a scattering intensity $I_{obs}$ which is obtained experimentally according to the following procedure.

First, the scattering intensity $I_{obs}$ is represented by the following expression (1). In addition, a structure factor S(Q) (Q: scattering vector) is obtained by dividing a coherent scattering $I_{coh}$ by the product of the number N of atoms and the square of an atomic scattering factor f, as represented by the following expression (2).

$$I_{obs} = I_{coh} + I_{incoh} + I_{fluorescence} \qquad (1)$$

$$S(Q) = \frac{I_{coh}}{Nf^2} \qquad (2)$$

The structure factor S(Q) is used for pair distribution function (PDF) analysis. In the above expression (2), a required intensity is solely the coherent scattering $I_{coh}$. The incoherent scattering $I_{incoh}$ and the X-ray fluorescence $I_{fluorescence}$ can be subtracted from the scattering intensity $I_{obs}$ by a blank measurement, subtraction using a theoretical expression, and a discriminator of a detector.

The coherent scattering $I_{coh}$ is represented by Debye's scattering expression (the following expression (3)) (N: total number of atoms, f: atomic scattering factor, $r_{ij}$: interatomic distance between i and j).

$$I_{coh} = \sum_{i=1}^{N}\sum_{j=1}^{N} f_i f_j \frac{\sin Qr_{ij}}{Qr_{ij}} \qquad (3)$$

Focusing on any atom, in a case where an atomic density at the distance r is denoted by $\rho(r)$, the number of atoms present inside a sphere having a radius of r to r + d(r) is $4\pi r^2\rho(r)dr$, and thus the above expression (3) is represented by the following expression (4).

$$I_{coh} = Nf^2\left[1 + 4\pi\int_0^\infty r^2\rho(r)\frac{\sin Qr}{Qr}dr\right] \qquad (4)$$

In a case where an average density of atoms is denoted by $\rho_0$, the above expression (4) is modified to obtain the following expression (5).

$$\frac{I_{coh}}{N} = f^2\left[1 + 4\pi\int_0^\infty r^2(\rho(r) - \rho_0)\frac{\sin Qr}{Qr}\right] \qquad (5)$$

From the above expression (5) and the above expression (2), the following expression (6) is obtained.

$$4\pi r^2\rho(r) = 4\pi r^2\rho_0 + \frac{2r}{\pi}\int_0^\infty Q[S(Q) - 1]\sin QrdQ \qquad (6)$$

The pair distribution function g(r) is represented by the following expression (7).

$$g(r) = \frac{\rho_r}{\rho_0} \qquad (7)$$

From the above expression (6) and the above expression (7), the following expression (8) is obtained.

$$g(r) = 1 + \frac{1}{2\pi^2\rho_0 r}\int_0^\infty Q[S(Q) - 1]\sin QrdQ \qquad (8)$$

As described above, the pair distribution function can be determined by the Fourier transform of the structural factor S(Q). In order to easily observe medium-range and long-range order, the pair distribution function g(r) is converted into an expression: $G(r) = 4\pi r(g(r) - 1)$, which is the reduced pair distribution function G(r) (Fig. 3). The g(r) which oscillates around 0 represents a density difference from the average density at each interatomic distance, and it is larger than the average density of 1 in a case where there is a correlation at a specific interatomic distance. As a result, it reflects the distance and coordination number of elements corresponding to the local to intermediate distance. In a case where the order is lost, $\rho(r)$ approaches the average density, and thus g(r) approaches 1. Therefore, in the amorphous structure, as r is larger, the order is lost, and thus g(r) is 1, that is, G(r) is 0.

In the requirement A-1, as shown in Fig. 3, in the reduced pair distribution function G(r) of the solid electrolyte (II) obtained from an X-ray total scattering measurement, a first peak P1 in which a peak top is located in a range where r is 1.43 ± 0.2 Å and a second peak P2 in which a peak top is located in a range where r is 2.40 ± 0.2 Å are present, G(r) of the peak top of the first peak P1 is more than 1.0 (preferably, 1.2 or more), and G(r) of the peak top of the second peak P2 is 0.8 or more (preferably more than 1.0).

In Fig. 3, the peak top of the first peak P1 is located at 1.43 Å, and the peak top of the second peak P2 is located at 2.40 Å.

At the position of 1.43 Å, a peak attributed to the interatomic distance of boron (B) - oxygen (O) is present. In addition, at the position of 2.40 Å, a peak attributed to the interatomic distance of boron (B) - boron (B) is present. That is, the fact that the above-described two peaks (the first peak and the second peak) are observed means that periodic structures corresponding to the above-described two interatomic distances are present in the solid electrolyte (II).

In addition, in the requirement A-2, as shown in Fig. 3, the absolute value of G(r) in a range where r is more than 5 Å and 10 Å or less is less than 1.0. As described above, the fact that the absolute value of G(r) in a range where r is more than 5 Å and 10 Å or less is less than 1.0 means that the long-range ordered structure is hardly present in the solid electrolyte (II).

In the above-described reduced pair distribution function G(r), peaks other than the first peak and the second peak may be present in a range where r is 5 Å or less.

A method of forming the solid electrolyte (II) into an amorphous state will be described. The solid electrolyte (I) can also be formed into an amorphous state by the same method.

A method of forming the solid electrolyte (II) into an amorphous state is not particularly limited. For example, in preparation of the solid electrolyte (II), a method of using, as a raw material, a lithium-containing oxide subjected to a mechanical milling treatment can be adopted. The mechanical milling treatment may be performed in the presence of the lithium salt.

-Mechanical milling treatment-

The mechanical milling treatment is a treatment of pulverizing a sample while applying mechanical energy. Examples of the mechanical milling treatment include a milling treatment using a ball mill, a vibration mill, a turbo mill, or a disc mill, and from the viewpoint of obtaining the amorphous solid electrolyte (II) with high productivity, a milling treatment using a ball mill is preferable. Examples of the ball milling include vibration ball milling, rotary ball milling, and planetary ball milling, and planetary ball milling is more preferable.

Conditions for the ball mill treatment are appropriately adjusted depending on the treatment target. A material of pulverization balls (media) is not particularly limited, and examples thereof include agate, silicon nitride, zirconia, alumina, and an iron-based alloy, in which stabilized zirconia (YSZ) is preferable. An average particle diameter of the pulverization balls is not particularly limited, but from the viewpoint that the solid electrolyte (II) can be produced with high productivity, it is preferably 1 to 10 mm and more preferably 3 to 7 mm. The above-described average particle diameter is obtained by randomly measuring diameters of 50 pulverization balls and arithmetically averaging the measured values. In a case where the pulverization balls are not spherical, a major axis is taken as the diameter. The number of pulverization balls is not particularly limited, and the ball mill treatment is usually performed using 10 to 100 balls, preferably 40 to 60 balls.

A material of a pulverization pot in the ball mill treatment is also not particularly limited. Examples thereof include agate, silicon nitride, zirconia, alumina, and an iron-based alloy, and stabilized zirconia (YSZ) is preferable.

A rotation speed of the ball mill treatment is not particularly limited, and can be set to, for example, 200 to 700 rpm, preferably 350 to 550 rpm. A treatment time of the ball milling is not particularly limited, and can be set to, for example, 10 to 200 hours, preferably 20 to 140 hours. The atmosphere of the ball mill treatment may be an atmosphere of the air or an atmosphere of an inert gas (for example, argon, helium, nitrogen, or the like).

In the production of the solid electrolyte (II), it is preferable to perform the following steps 1A to 3A.

Step 1A: step of subjecting a lithium-containing oxide to a mechanical milling treatment in the presence of a lithium salt
Step 2A: step of mixing the product obtained in the step 1A with water
Step 3A: step of removing water from the dispersion liquid obtained in the step 2A to obtain the solid electrolyte (II)

In the step 1A, an amount of the lithium salt used is not particularly limited and is appropriately adjusted such that the solid electrolyte (II) defined in the present invention is obtained.

In the above-described step 2A, an amount of water used is not particularly limited. For example, the amount of water used can be set to 10 to 200 parts by mass, preferably 50 to 150 parts by mass with respect to 100 parts by mass of the product obtained in the step 1A.

The method of mixing the product obtained in the step 1A with the water is not particularly limited, and the mixing may be performed in a batchwise manner or may be performed such that the water is added stepwise to the product obtained in the step 1A. In the mixing, an ultrasonic treatment may be performed as necessary. A time of the ultrasonic treatment is not particularly limited, and can be set to, for example, 10 minutes to 5 hours.

The step 3A is a step of removing water from the dispersion liquid obtained in the step 2A to obtain the solid electrolyte (II). The method of removing the water from the dispersion liquid obtained in the step 2A is not particularly limited, and the water may be removed by a heating treatment or may be removed by a vacuum drying treatment.

Drying conditions are not particularly limited, and examples thereof include each of drying conditions applied in Examples.

Before the above-described step 1A, a step 0 of subjecting the lithium-containing oxide to a mechanical milling treatment in an environment in which a lithium salt is not present may be performed.

In the production of the solid electrolyte (II), it is also preferable to perform the following steps 1B to 3B, instead of the above-described steps 1A to 3A.

Step 1B: step of subjecting a lithium-containing oxide to a mechanical milling treatment
Step 2B: step of mixing the product obtained in the step 1B with water and a lithium salt
Step 3B: step of removing water from the dispersion liquid obtained in the step 2B to obtain the solid electrolyte (II)

The difference between the step 1B and the step 1A is that the mechanical milling treatment is performed in the presence of the lithium salt in the step 1A, whereas the mechanical milling treatment is performed without using the lithium salt in the step 1B. Accordingly, in the step 2B, the product obtained in the step 1B is mixed with water and a lithium salt.

A procedure of the step 2B is not particularly limited, and may be a method (method 1) of collectively mixing the product obtained in the step 1B, water, and a lithium salt; a method (method 2) of preparing a dispersion liquid by mixing the product obtained in the step 1B with water, and then mixing the obtained dispersion liquid with a lithium salt; or a method (method 3) of preparing a dispersion liquid 1 by mixing the product obtained in the step 1B with water, preparing a solution 2 by mixing a lithium salt with water, and then mixing the dispersion liquid 1 with the solution 2. In a case where the product obtained in the step 1B is mixed with water, a dispersion treatment such as an ultrasonic treatment may be appropriately performed.

In the method 2, in a case where the dispersion liquid obtained by mixing the product obtained in the step 1B with water is mixed with a lithium salt, the obtained solution is likely to be gelated in a case where the lithium salt is too much, so that the mixing amount of the lithium salt is restricted. On the other hand, in the method 3, even in a case where the product obtained in the step 1B and the lithium salt are mixed in an equimolar amount, the gelation of the dispersion liquid is less likely to occur, so that the mixing amount of the lithium salt can be increased. From this viewpoint, the method 3 is preferable.

The procedures of the step 3B and the step 3A are the same.

In the production of the solid electrolyte (II), it is also preferable to perform the following steps 1C to 3C, instead of the above-described steps 1A to 3A.

Step 1C: step of subjecting a lithium-containing oxide to a mechanical milling treatment
Step 2C: step of mixing the product obtained in the step 1C with water
Step 3C: step of mixing a product obtained by removing water from the dispersion liquid obtained in the step 2C with a lithium salt to obtain the solid electrolyte (II)

The procedures of the step 1C and the step 1B are the same.

The procedures of the step 2C and the step 2A are the same.

The step 3C is different from the steps 3A and 3B in that the product obtained by removing water from the dispersion liquid obtained in the step 2C is mixed with a lithium salt.

In the step 3C, an amount of the lithium salt used is not particularly limited and is appropriately adjusted such that the solid electrolyte (II) defined in the present invention is obtained.

The method of mixing the product obtained by removing water from the dispersion liquid obtained in the step 2C with a lithium salt is not particularly limited, and a method of infusing the product with a solution obtained by dissolving the lithium salt in water to mix the two may be adopted.

(Component composition of solid electrolyte (II))

As described above, the solid electrolyte (II) used in the present invention is an amorphous solid electrolyte, and the solid electrolyte (II) contains the lithium-containing oxide, the lithium salt, and water.

The value of the ratio of the content of the water to the content of the lithium-containing oxide in the solid electrolyte (II) is preferably 1 to 12, more preferably 2 to 12, and still more preferably 3 to 11 in terms of molar ratio. In addition, the molar ratio is also preferably 2 to 10, 2 to 8, 2 to 7, or 3 to 7.

The value of the ratio of the content of the lithium salt to the content of the lithium-containing oxide in the solid electrolyte (II) is preferably 0.001 to 1.5, more preferably 0.001 to 1.2, still more preferably 0.01 to 1.2, particularly preferably 0.1 to 1.2, and most preferably 0.5 to 1.2 in terms of a molar ratio.

In the solid electrolyte (II), it is more preferable that the value of the ratio of the content of the lithium salt to the content of the lithium-containing oxide is 0.001 to 1.5 in terms of a molar ratio, and the value of the ratio of the content of water to the content of the lithium-containing oxide is 1 to 12 in terms of a molar ratio.

The molar amounts of the lithium-containing oxide, the lithium salt, and the water in the solid electrolyte (II) can be determined based on element analysis. Examples of the element analysis include a method of element analysis described in the element composition of the solid electrolyte (II), which will be described later. In addition, the molar amount of the water can also be determined by Karl Fischer method or the like.

The content of the water in the solid electrolyte (II) is preferably 50% by mass or less, more preferably 45% by mass or less, still more preferably 40% by mass or less, and particularly preferably 35% by mass or less. In addition, the content of the water in the solid electrolyte (II) is also preferably 30% by mass or less, or 25% by mass or less.

In addition, the content of the water in the solid electrolyte (II) is usually 5% by mass or more, preferably 10% by mass or more and more preferably 15% by mass or more. Therefore, the content of the water in the solid electrolyte (II) is preferably 5% to 50% by mass, more preferably 5% to 45% by mass, still more preferably 10% to 40% by mass, and even more preferably 10% to 35% by mass; and also preferably 10% to 30% by mass, 15% to 30% by mass, or 15% to 25% by mass.

The content of the lithium-containing oxide in the solid electrolyte (II) is preferably 20% to 80% by mass, more preferably 20% to 75% by mass, and still more preferably 25% to 70% by mass.

In addition, the content of the lithium salt in the solid electrolyte (II) is preferably 0.5% to 60% by mass, more preferably 1.0% to 55% by mass, and still more preferably 2.0% to 50% by mass; and also preferably 5.0% to 50% by mass.

-Lithium-containing oxide-

As described above, the lithium-containing oxide constituting the solid electrolyte (II) contains Li, B, and O.

The above-described lithium-containing oxide is preferably a compound represented by $Li_{2+x}B_{4+y}O_{7+z}$ (-0.3 < x < 0.3, -0.3 < y < 0.3, -0.3 < z < 0.3). That is, in a case where a molar amount of Li is represented by setting a molar amount of B to 4.00, the molar amount of Li is preferably 1.58 to 2.49 (that is, $1.7 \times 4/4.3$ to $2.3 \times 4/3.7$), and the molar amount of O is preferably 6.23 to 7.89 (that is, $6.7 \times 4/4.3$ to $7.3 \times 4/3.7$). In other words, assuming that the molar content amount of B is set to 4.00, it is preferable that the relative value of the molar content amount of Li is 1.58 to 2.49 and the molar amount of O is 6.23 to 7.89. Typical examples of such a lithium-containing oxide include lithium tetraborate ($Li_2B_4O_7$).

In addition, the above-described lithium-containing oxide is also preferably a compound represented by $Li_{1+x}B_{3+y}O_{5+z}$ (-0.3 < x < 0.3, -0.3 < y < 0.3, -0.3 < z < 0.3). Typical examples of such a lithium-containing oxide include lithium triborate ($LiB_3O_5$).

In addition, the above-described lithium-containing oxide is also preferably a compound represented by $Li_{3+x}B_{11+y}O_{18+z}$ (-0.3 < x < 0.3, -0.3 < y < 0.3, -0.3 < z < 0.3). Typical examples of such a lithium-containing oxide include $Li_3B_{11}O_{18}$.

In addition, the above-described lithium-containing oxide is also preferably a compound represented by $Li_{3+x}B_{7+y}O_{12+z}$ (-0.3 < x < 0.3, -0.3 < y < 0.3, -0.3 < z < 0.3). Typical examples of such a lithium-containing oxide include $Li_3B_7O_{12}$.

Therefore, the above-described lithium-containing oxide is preferably at least one of $Li_{2+x}B_{4+y}O_{7+z}$, $Li_{1+x}B_{3+y}O_{5+z}$, $Li_{3+x}B_{11+y}O_{18+z}$, or $Li_{3+x}B_{7+y}O_{12+z}$ described above.

In addition, at least one of $LiBO_5$, $Li_2B_7O_{12}$, $LiB_2O_3(OH)H_2O$, or $Li_4B_8O_{13}(OH)_2(H_2O)_3$ can also be used as the lithium-containing oxide, instead of the above-described lithium-containing oxide or together with the above-described lithium-containing oxide.

In the solid electrolyte (II), it is preferable that the lithium-containing oxide is in an amorphous state. That is, it is preferable that the lithium-containing oxide in the solid electrolyte (II) is also in a desired amorphous state such that the solid electrolyte (II) is in the above-described amorphous state.

Among these, the lithium-containing oxide is preferably amorphous lithium tetraborate.

-Lithium salt-

The lithium salt constituting the solid electrolyte (II) used in the present invention is not particularly limited; examples thereof include a salt composed of $Li^+$ and an anion; and a salt composed of $Li^+$ and an organic anion is preferable and a salt composed of $Li^+$ and an organic anion having a halogen atom is more preferable.

It is preferable that the lithium salt constituting the solid electrolyte (II) used in the present invention contains two or more elements selected from the group consisting of an element of Group 3 of the periodic table, an element of Group 4 of the periodic table, an element of Group 13 of the periodic table, an element of Group 14 of the periodic table, an element of Group 15 of the periodic table, an element of Group 16 of the periodic table, an element of Group 17 of the periodic table, and H.

As the lithium salt constituting the solid electrolyte (II) used in the present invention, for example, a compound represented by Formula (1) is preferable.

Formula (1)          $LiN(R_{f1}SO_2)(R_{f2}SO_2)$

$R_{f1}$ and $R_{f2}$ each independently represent a halogen atom or a perfluoroalkyl group.

In a case where $R_{f1}$ and $R_{f2}$ are a perfluoroalkyl group, the number of carbon atoms in the perfluoroalkyl group is not particularly limited.

$R_{f1}$ and $R_{f2}$ are preferably a halogen atom or a perfluoroalkyl group having 1 to 6 carbon atoms, more preferably a halogen atom or a perfluoroalkyl group having 1 or 2 carbon atoms, and still more preferably a halogen atom. As the volume of the terminal group increases, the steric hindrance increases, which is a factor that hinders ion conduction. Therefore, in a case where $R_{f1}$ and $R_{f2}$ are a perfluoroalkyl group, the perfluoroalkyl group preferably has a small number of carbon atoms.

The lithium salt which can be contained in the solid electrolyte (II) used in the present invention is not limited to the above-described compound represented by Formula (1). Examples of the lithium salt which can be contained in the solid electrolyte (II) used in the present invention are shown below.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; and an inorganic chloride salt such as $LiAlCl_4$

(L-2) Fluorine-containing organic lithium salt: perfluoroalkane sulfonate such as $LiCF_3SO_3$; fluorosulfonylimide salt or perfluoroalkanesulfonylimide salt such as $LiN(CF_3SO_2)_2$, $LiN(CF_3CF_2SO_2)_2$, $LiN(FSO_2)_2$ (in the present specification, also described as $Li(FSO_2)_2N$), and $LiN(CF_3SO_2)(C_4F_9SO_2)$; perfluoroalkane sulfonylmethide salt such as $LiC(CF_3SO_2)_3$; and fluoroalkyl fluorophosphate (preferably, perfluoroalkyl fluorophosphate) such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$

(L-3) Oxalatoborate salt: lithium bis(oxalato)borate and lithium difluorooxalatoborate

In addition to the above, examples of the lithium salt include LiF, LiCl, LiBr, LiI, $Li_2SO_4$, $LiNO_3$, $Li_2CO_3$, $CH_3COOLi$, $LiAsF_6$, $LiSbF_6$, $LiAlCl_4$, and $LiB(C_6H_5)_4$.

Among these, $LiPF_6$, $LiBF_4$, $LiAsF_6$, $LiSbF_6$, $LiClO_4$, $Li(R_{f11}SO_2)$, $LiN(R_{f11}SO_2)_2$, $LiN(FSO_2)_2$, or $LiN(R_{f11}SO_2)(R_{f12}SO_2)$ is preferable; and $LiPF_6$, $LiBF_4$, $LiN(R_{f11}SO_2)_2$, $LiN(FSO_2)_2$, or $LiN(R_{f11}SO_2)(R_{f12}SO_2)$ is more preferable. In these examples, $R_{f11}$ and $R_{f12}$ each independently represent a perfluoroalkyl group, and the number of carbon atoms therein is preferably 1 to 6, and more preferably 1 to 2. In addition, $LiNO_3$ or 1,1,2,2,3,3-hexafluoropropane-1,3-disulfonimide lithium is also preferable as the lithium salt.

(Element composition of solid electrolyte (II))

Regarding the solid electrolyte (II), the component composition thereof is described with reference to the compound constituting the solid electrolyte (II). Next, the solid electrolyte (II) will be described from the viewpoint of a preferred element composition. That is, in one aspect of the electrode composition according to the embodiment of the present invention, the solid electrolyte (II) can be specified as follows, for example, based on the element composition without including the "lithium-containing oxide" and the "lithium salt" as the invention specific matters.

In the solid electrolyte (II) used in the present invention, in a case where the molar amount of B in the solid electrolyte (II) is set to 4.00, the molar amount of Li is preferably 1.58 to 3.49 (preferably 1.58 to 3.00, more preferably 1.90 to 3.00, and still more preferably 2.00 to 3.00). In addition, in a case where the molar amount of B in the solid electrolyte (II) is set to 4.00, the molar amount of O is preferably 6.23 to 25.00 (preferably 6.50 to 23.00, more preferably 8.00 to 23.00, still more preferably 10.00 to 23.00, and particularly preferably 10.00 to 18.00). In addition, in a case where the molar amount of B in the solid electrolyte (II) is set to 4.00, it is preferable that molar amounts of elements other than B, Li, and O are each preferably 0.001 to 10.00 (preferably 0.001 to 6.00 and more preferably 0.01 to 5.00).

The content of each element is specified by a general element analysis. As a method of the element analysis, for example, Li and B are analyzed by inductively coupled plasma optical emission spectrometry (ICP-OES); N and the like are analyzed by an inert gas melting method; and F and S are analyzed by combustion ion chromatography. Regarding O, analyzed masses of elements other than O are added together, and the content of O can be calculated as a difference between the analyzed masses and the total amount of the powder. The method of calculating the content of each element is not limited to those described above, and from an analysis result of a content of one kind of element, a content of another element may be estimated in consideration of the structure of the compound to be used.

From the content of each element calculated by the element analysis, the molar amounts of Li, O, and other elements in a case where the molar amount of B is set to 4.00 are calculated.

In a preferred aspect of the solid electrolyte (II), in addition to Li, B, and O, the solid electrolyte (II) further contains one or more elements (E) selected from an element of Group 4 of the periodic table, an element of Group 15 of the periodic table, an element of Group 16 of the periodic table, an element of Group 17 of the periodic table, Si, C, Sc, and Y; and it is more preferable to contain two or more kinds thereof.

Examples of the element of Group 4 of the periodic table include Ti, Zr, Hf, and Rf. Examples of the element of Group 15 of the periodic table include N, P, As, Sb, Bi, and Mc. Examples of the element of Group 16 of the periodic table S, Se, Te, Po, and Lv. Examples of the element of Group 17 of the periodic table include F, Cl, Br, I, At, and Ts.

Among these, it is preferable to contain one or more elements (E) selected from F, Cl, Br, I, S, P, Si, Se, Te, C, Sb, As, Sc, Y, Zr, Ti, Hf, and N; and it is more preferable to contain two or more kinds thereof.

The kind of the element (E) contained in the solid electrolyte (II) may be 3 or more, and is preferably 2 to 5 and more preferably 2 to 4.

As a preferred embodiment of the solid electrolyte (II), it is preferable to contain two or more elements (E) selected from F, S, N, P, and C; it is more preferable to contain two or more elements (E) selected from F, S, C, and N; and it is still more preferable to contain three elements (E) of F, S, and N.

In the solid electrolyte (II) containing one or more kinds (preferably two or more kinds) of the above-described elements (E), in a case where the molar amount of Li is represented by setting the molar amount of B in the solid electrolyte (II) to 4.00, the molar amount of Li is preferably 1.58 to 3.49. That is, in a case where the molar content amount of B is set to 4.00, the relative value of the molar content amount of Li is preferably 1.58 to 3.49. Among these, in a case where the molar amount of Li is represented by setting the molar amount of B in the solid electrolyte (II) to 4.00, the molar amount of Li is preferably 1.58 to 3.00, more preferably 1.90 to 3.00, and still more preferably 2.00 to 3.00.

In the solid electrolyte (II) containing one or more kinds (preferably two or more kinds) of the above-described elements (E), in a case where the molar amount of O is represented by setting the molar amount of B in the solid electrolyte (II) to 4.00, the molar amount of O is preferably 6.23 to 25.00. That is, in a case where the molar content amount of B is set to 4.00, the relative value of the molar content amount of O is preferably 6.23 to 25.00. Among these, in a case where the molar amount of O is represented by setting the molar amount of B in the solid electrolyte (II) to 4.00, the molar amount of O is preferably 6.50 to 23.00, more preferably 8.00 to 23.00, still more preferably 10.00 to 23.00, and particularly preferably 10.00 to 18.00.

In the solid electrolyte (II) containing one or more kinds (preferably two or more kinds) of the above-described elements (E), in a case where the molar amount of the elements (E) is represented by setting the molar amount of B in the solid electrolyte (II) to 4.00, each molar amount of the elements (E) is preferably 0.001 to 10.00. That is, in a case where the molar content amount of B is set to 4.00, the relative value of each molar content amount of the elements (E) is preferably 0.001 to 10.00. Among these, in a case where the molar amount of the element (E) is represented by setting the molar amount of B in the solid electrolyte (II) to 4.00, each molar amount of the elements (E) is preferably 0.001 to 6.00 and more preferably 0.01 to 5.00.

Examples of one suitable aspect of the element composition of the solid electrolyte (II) containing one or more kinds (preferably two or more kinds) of the above-described elements (E) include a solid electrolyte containing Li, B, O, F, S, and N, in which, in a case where the molar amount B is set to 4.00, the molar amount of Li is 1.58 to 3.49 (preferably 1.58 to 3.00, more preferably 1.90 to 3.00, and still more preferably 2.00 to 3.00), the molar amount of O is 6.23 to 25.00 (preferably 6.50 to 23.00, more preferably 8.00 to 23.00, still more preferably 10.00 to 23.00, and particularly preferably 10.00 to 18.00), the molar amount of F is 0.001 to 10.00 (preferably 0.01 to 10.00), the molar amount of S is 0.001 to 2.00 (preferably 0.01 to 2.00), and the molar amount of N is 0.001 to 1.00 (preferably 0.005 to 1.00).

The solid electrolyte (II) used in the present invention is in the above-described amorphous state, and as a result, it is preferable that the solid electrolyte (II) exhibits the following characteristics in addition to the above-described X-ray diffraction characteristics.

(Solid $^7$Li-NMR spectral characteristics)

In the solid electrolyte (II), a proportion of a full-width at half maximum, which is calculated by the following method from a spectrum obtained by performing a solid $^7$Li-NMR measurement at 20°C and 120°C, is preferably 50% or less, more preferably 40% or less, and still more preferably 35% or less. The lower limit thereof is not particularly limited, but is usually 10% or more.

The above-described proportion of the full-width at half maximum is obtained by performing a solid $^7$Li-NMR measurement of the solid electrolyte (II) at each of 20°C and 120°C; determining a full-width at half maximum (full-width 1 at half maximum) of a peak in which a chemical shift appears in a range of -100 to +100 ppm in a spectrum obtained by a measurement at 20°C, and a full-width at half maximum (full-width 2 at half maximum) of a peak in which a chemical shift appears in a range of -100 to +100 ppm in a spectrum obtained by a measurement at 120°C; and then calculating a percentage of a proportion of the full-width 2 at half maximum to the full-width 1 at half maximum {(Full-width 2 at half maximum/Full-width 1 at half maximum) × 100}. The full-width at half maximum (FWHM) of the peak means a width (ppm) at a point (H/2) of 1/2 of a height (H) of the peak.

Hereinafter, the above-described characteristic will be described with reference to Fig. 4. Fig. 4 shows an example of the spectrum obtained in a case where the solid $^7$Li-NMR measurement of the solid electrolyte (II) is performed at 20°C or 120°C. The spectrum shown on the lower side by the solid line in Fig. 4 is a spectrum obtained in a case where the solid $^7$Li-NMR measurement is performed at 20°C; and the spectrum shown on the upper side by the broken line in Fig. 4 is a spectrum obtained in a case where the solid $^7$Li-NMR measurement is performed at 120°C.

Generally, in the solid $^7$Li-NMR measurement, in a case where mobility of $Li^+$ is high, the peak to be obtained is a sharper peak. In the aspect shown in Fig. 4, in a case where the spectrum at 20°C and the spectrum at 120°C are compared, the spectrum at 120°C is sharper. That is, in the aspect shown in Fig. 4, it is indicated that the mobility of $Li^+$ is high due to the presence of Li defects. It is conceived that such a solid electrolyte (II) is likely to be plastically deformed due to the above-described defect structure, and thus has excellent hopping property of $Li^+$.

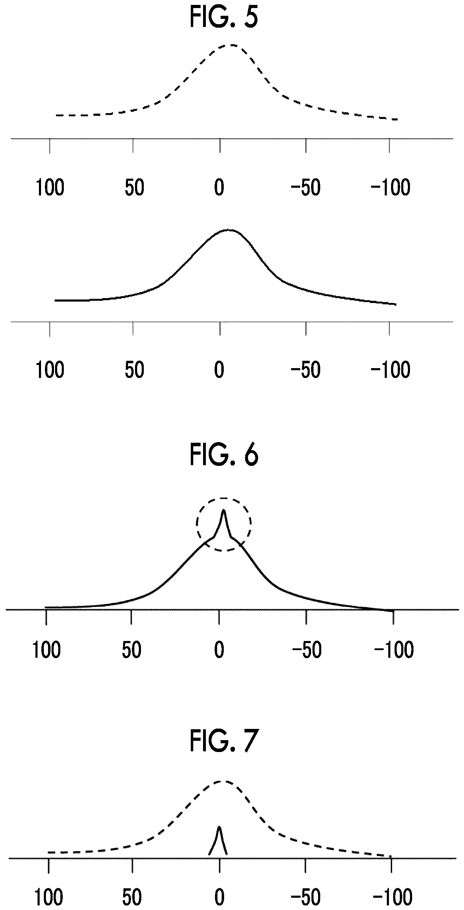

For reference, in a case where a general lithium tetraborate crystal is subjected to the solid $^7$Li-NMR measurement at 20°C or 120°C, the spectrum measured at 20°C shown by the solid line, shown on the lower side of Fig. 5, and the spectrum measured at 120°C shown by the broken line, shown on the upper side of Fig. 5, tends to have substantially the same shape. That is, the lithium tetraborate crystal has no Li defects and the like, and as a result, it has a high elastic modulus and is hardly plastically deformed.

Conditions for the above-described solid $^7$Li-NMR measurement are as follows.

The measurement is performed by a single pulse method using a 4 mm HX CP-MAS probe, 90° pulse width: 3.2 μs, observation frequency: 155.546 MHz, observation width: 1397.6 ppm, repetition time: 15 sec, integration: 1 time, and MAS rotation speed: 0 Hz.

In addition, in the solid electrolyte (II) used in the present invention, in a case where a first peak appearing in a range of -100 to +100 ppm in the spectrum obtained in a case where the solid $^7$Li-NMR measurement is performed at 20°C is waveform-separated, it is preferable that a second peak having a full-width at half maximum of 5 ppm or less appears in a range with a chemical shift of -3 to 3 ppm, and a proportion of an area intensity of the second peak to an area intensity of the first peak is 0.5% or more. The above-described proportion of the area intensity is more preferably 2% or more, still more preferably 5% or more, particularly preferably 10% or more, and most preferably 15% or more. In the aspect of the present invention in which the solid electrolyte (II) contains water, the solid $^7$Li-NMR spectral characteristics of the solid electrolyte (II) tend to be as described above. The upper limit of the above-described proportion of the area intensity is not particularly limited, but is usually 50% or less.

Hereinafter, the above-described characteristic will be described with reference to Figs. 6 and 7.

Fig. 6 shows an example of the spectrum obtained in a case where the solid $^7$Li-NMR measurement of the solid electrolyte (II) is performed at 20°C. As shown in Fig. 6, in the solid electrolyte (II), a peak (corresponding to the first peak) is observed in a range of -100 to +100 ppm, and a small peak is observed in the vicinity of a chemical shift of 0 ppm, as shown by the broken line at the first peak. As described above, it is considered to be affected the fact that a sharp peak is observed in a case where the mobility of $Li^+$ is high.

Next, Fig. 7 shows a diagram in a case where the first peak is waveform-separated. As shown in Fig. 7, the first peak is waveform-separated into a small peak (corresponding to the second peak) represented by the solid line, and a large peak represented by the broken line. The above-described second peak is a peak which appears in a range with a chemical shift of -3 to 3 ppm, and has a full-width at half maximum of 5 ppm or less.

In the solid electrolyte (II), it is preferable that the proportion of the area intensity of the second peak shown by the solid line in Fig. 7 to the area intensity of the first peak (peak before the waveform separation) shown in Fig. 6 {(Area intensity of second peak/Area intensity of first peak) $\times$ 100 (%)} is within the above-described range.

Examples of the method of waveform separation include a method using a known software, and examples of the software include Igor Pro, which is graph processing software manufactured by WaveMetrics, Inc.

(Raman spectral characteristics)

In the solid electrolyte (II), a coefficient of determination, which is obtained by performing linear regression analysis according to a least-squares method in a wave number range of 600 to 850 $cm^{-1}$ in a Raman spectrum of the solid electrolyte (II), is preferably 0.9400 or more and more preferably 0.9600 or more, and also preferably 0.9800 or more. The upper limit thereof is not particularly limited, but is usually 1.0000 or less.

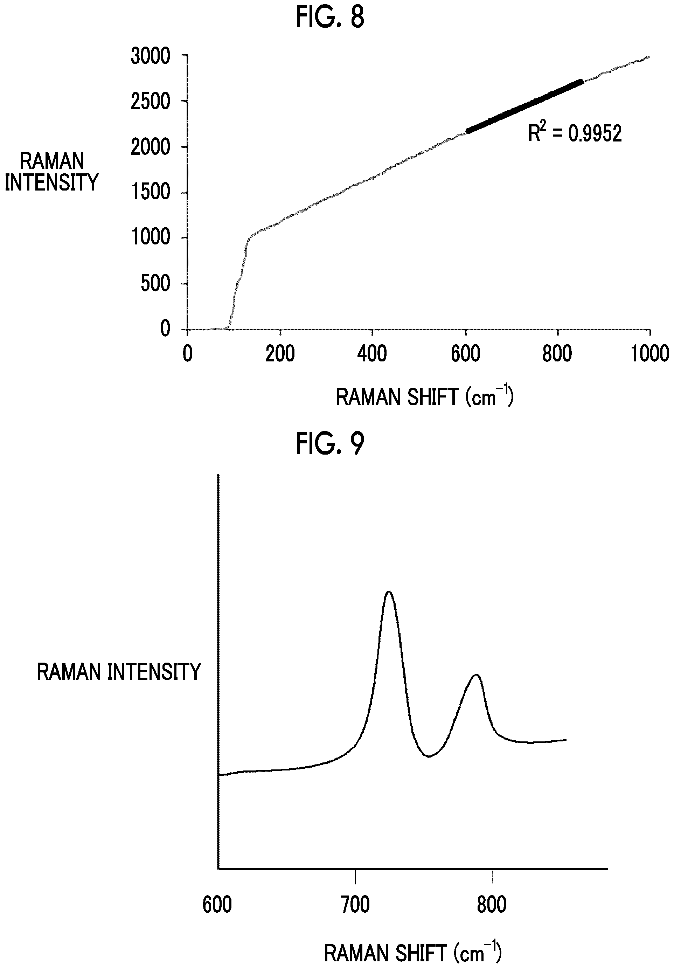

The above-described Raman spectral characteristics will be described with reference to Fig. 8.

First, a Raman spectrum of the solid electrolyte (II) is acquired. Raman imaging is performed as the measuring method of the Raman spectrum. The Raman imaging is a microscopic spectroscopy method which combines Raman spectroscopy with a microscopic technique. Specifically, the Raman imaging is a method of scanning a sample with excitation light to detect measurement light including Raman scattered light, and then visualizing distribution or the like of components based on the intensity of the measurement light.

The measurement conditions for the Raman imaging are as follows: an environment of atmospheric air of 27°C, an excitation light of 532 nm, an objective lens of 100 magnifications, a point scanning according to the mapping method, a

step of 1 $\mu$m, an exposure time per point of 1 second, the number of times of integration of 1, and a measurement range of a range of 70 $\mu$m $\times$ 50 $\mu$m. However, the measurement range may be narrower depending on a film thickness of the sample.

In addition, the Raman spectrum data is subjected to a principal component analysis (PCA) processing to remove noise. Specifically, in the principal component analysis processing, the spectrum is recombined using components having an autocorrelation coefficient of 0.6 or more.

Fig. 8 shows an example of the Raman spectrum of the solid electrolyte (II). In the graph shown in Fig. 8, the vertical axis indicates the Raman intensity, and the lateral axis indicates the Raman shift. A coefficient of determination (coefficient of determination $R^2$) obtained by performing linear regression analysis according to a least-squares method is calculated in a wave number range of 600 to 850 cm$^{-1}$ of the Raman spectrum shown in Fig. 8. That is, in a wave number range of 600 to 850 cm$^{-1}$ in the Raman spectrum of Fig. 8, a regression line (the thick broken line in Fig. 8) is determined according to the least-squares method, and the coefficient of determination $R^2$ of the regression line is calculated. As the coefficient of determination, a value between 0 (no linear correlation) and 1 (complete linear correlation of the measured values) is taken according to the linear correlation of the measured values.

In the solid electrolyte (II), a peak is not substantially observed in the wave number range of 600 to 850 cm$^{-1}$ as shown in Fig. 8, and as a result, a high coefficient of determination is exhibited.

The above-described coefficient of determination $R^2$ corresponds to the square of the correlation coefficient (Pearson's product-moment correlation coefficient). More specifically, in the present specification, the coefficient of determination $R^2$ is calculated according to the following expression. In the expression, $x_1$ and $y_1$ represent a wave number in the Raman spectrum and a Raman intensity corresponding to the wave number; $x_2$ represents the (arithmetic) average of the wave numbers; and $y_2$ represents the (arithmetic) average of the Raman intensities.

$$R^2 = \frac{\left(\sum (x_1-x_2)\cdot(y_1-y_2)\right)^2}{\sum (x_1-x_2)^2 \cdot \sum (y_1-y_2)^2}$$

On the other hand, for reference, Fig. 9 shows a Raman spectrum of a general lithium tetraborate crystal. As shown in Fig. 9, in a case of a general lithium tetraborate crystal, peaks are observed in a wave number range of 716 to 726 cm$^{-1}$ and a wave number range of 771 to 785 cm$^{-1}$, derived from the structure thereof. With the peaks, the coefficient of determination thereof is less than 0.9400 in a case where the coefficient of determination is calculated by performing linear regression analysis according to a least-squares method in a wave number range of 600 to 850 cm$^{-1}$.

That is, the fact that the coefficient of determination is 0.9400 or more means that the solid electrolyte (II) does not substantially include a crystal structure. Therefore, as a result, it is considered that the solid electrolyte (II) has a characteristic of easily undergoing plastic deformation and a characteristic of excellent hopping property of Li$^+$.

(Infrared absorption spectral characteristics)

In an infrared absorption spectrum of the solid electrolyte (II), a value of a ratio of a maximum absorption intensity in a wave number range of 3,000 to 3,500 cm$^{-1}$ to a maximum absorption intensity in a wave number range of 800 to 1,600 cm$^{-1}$ (Maximum absorption intensity in wave number range of 3000 to 3500 cm$^{-1}$/Maximum absorption intensity in wave number range of 800 to 1600 cm$^{-1}$) is preferably 1/5 or more (0.2 or more). Among these, the above-described ratio is preferably 3/10 or more and more preferably 2/5 or more. The upper limit thereof is not particularly limited, but is preferably 1 or less.

In the infrared absorption spectrum, an OH stretching vibration mode is observed in a wave number range of 3,000 to 3,500 cm$^{-1}$, and a B-O stretching vibration mode is observed in a wave number range of 800 to 1,600 cm$^{-1}$. In the solid electrolyte (II), a strong absorption intensity derived from the OH stretching vibration mode is observed, and it is confirmed that a large number of OH groups and/or a large amount of water are contained. In such a solid electrolyte (II), lithium ions tend to move easily, and as a result, the ion conductivity tends to be improved.

In the wave number range of 800 to 1,600 cm$^{-1}$, a vibration mode derived from the lithium salt can also be observed.

Measurement conditions for the above-described infrared absorption spectrum can be as follows.

The measurement is performed using objective lens: Cassegrain type (NA: 0.65) of 32 magnifications, detector: MCT-A, measurement range: 650 to 4,000 cm$^{-1}$, resolution: 4 cm$^{-1}$, and sample cell: diamond cell.

The obtained infrared absorption spectrum is subjected to correction for removing signals derived from water and

$CO_2$ in the air, and the background is further subjected to offset-correction to set the absorption intensity to 0. In addition, the measurement is performed in the air after vacuum drying at 40°C for 2 hours.

The ion conductivity (27°C) of the solid electrolyte (II) is not particularly limited, and from the viewpoint of application to various applications, it is preferably $1.0 \times 10^{-5}$ S/cm or more, more preferably $1.0 \times 10^{-4}$ S/cm or more, still more preferably $1.0 \times 10^{-3}$ S/cm or more, and particularly preferably $3.0 \times 10^{-3}$ S/cm or more. The upper limit thereof is not particularly limited, but is usually $1.0 \times 10^{-2}$ S/cm or less.

In addition, it is also preferable that the solid electrolyte (II) exhibits the following characteristics or physical properties.

(Mass reduction rate)

A mass reduction rate in a case where the solid electrolyte (II) is heated to 800°C is preferably 20% to 40% by mass and more preferably 25% to 35% by mass. It is considered that the mass reduction by the above-described heating is due to removal of moisture contained in the solid electrolyte (II). In a case where the solid electrolyte (II) contains such moisture, the conductivity of lithium ions can be further improved.

In the above-described heating treatment, the heating is performed at a temperature rising rate of 20 °C/sec in a range of 25°C to 800°C. A known thermogravimetric differential thermal analysis (TG-DTA) device can be used for measuring the mass reduction rate. The above-described mass reduction rate is calculated by {(Mass at 25°C - Mass at 800°C)/Mass at 25°C} × 100.

In the measurement of the mass reduction rate, the solid electrolyte (II) is subjected to vacuum drying at 40°C for 2 hours in advance. In addition, the measurement of the mass reduction rate is performed in the air.

In addition, the electrode composition according to the embodiment of the present invention may contain a solid electrolyte other than the solid electrolyte (I). The other solid electrolyte means a solid electrolyte in which ions can be moved therein. The solid electrolyte is preferably an inorganic solid electrolyte. Examples of the other solid electrolytes include an oxide-based solid electrolyte other than the solid electrolyte (I), a halide-based solid electrolyte, and a hydride-based solid electrolyte; and an oxide-based solid electrolyte is preferable.

<Active material>

As the active material constituting the electrode composition according to the embodiment of the present invention, a positive electrode active material and a negative electrode active material, which can be used for a typical all-solid-state secondary battery, can be used without particular limitation.

A shape of the active material is a particle shape. The median diameter M of the active material is not particularly limited as long as the M/N is satisfied, but is preferably 0.1 to 20 μm, more preferably 0.3 to 20 μm, and still more preferably 0.5 to 15 μm. The median diameter M of the active material can be measured using a laser diffraction/scattering-type particle size distribution analyzer.

A method of controlling the median diameter M of the active material is not particularly limited, and the median diameter M can be controlled by a general method.

The control of the median diameter of the active material can be performed using a crusher or a classifier. For example, a mortar, a ball mill, a sand mill, a vibratory ball mill, a satellite ball mill, a planetary ball mill, a vortex airflow-type jet mill, a sieve, or the like is suitably used. During the pulverization, wet pulverization of causing water or an organic solvent such as methanol to coexist with the negative electrode active material can be performed. In order to provide the desired particle diameter, classification is preferably performed. The classification method is not particularly limited, and a sieve, an air classifier, or the like can be used as desired. Both a dry-type classification and a wet-type classification can be used. Preferably, same as the solid electrolyte (I), the median diameter can be controlled by refining particles by a mechanical milling treatment described later, and classifying the particles by sieving.

Hereinafter, preferred aspects of the positive electrode active material and the negative electrode active material will be described.

In the following description, a case where the solid electrolyte (II) is used (aspect of an all-solid-state lithium ion secondary battery) will be described as an example, but even in a case where the solid electrolyte (I) containing an alkali metal or an alkaline earth metal other than lithium is used, the description can be appropriately performed with reference to this description.

A suitable aspect of the positive electrode active material will be described below.

(Positive electrode active material)

As the positive electrode active material, a positive electrode active material capable of reversibly intercalating and/or deintercalating lithium ions is preferable. The positive electrode active material is not particularly limited, and is preferably a transition metal oxide and more preferably a transition metal oxide containing a transition metal element Ma (one or more kinds of elements selected from Co, Ni, Fe, Mn, Cu, and V). In addition, an element Mb (an element of Group 1 (Ia) of the periodic table other than lithium, an element of Group 2 (IIa), or an element such as Al, Ga, In, Ge, Sn, Pb, Sb, Bi, Si, P, or B) may be mixed into the transition metal oxide. The amount of the Mb mixed is preferably 0 to 30 mol% with respect to the amount (100 mol%) of the transition metal element Ma. It is more preferable that the transition metal oxide is synthesized by mixing the above-described components such that a molar ratio Li/Ma is 0.3 to 2.2.

Specific examples of the transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds. Among them, the transition metal oxide having a bedded salt-type structure (MA) or the like is preferable, and $LiCoO_2$ or $LiNi_{1/3}Co_{1/3}Mn_{1/3}O_2$ is more preferable.

Examples of the transition metal oxide having a bedded salt-type structure (MA) include $LiCoO_2$ (lithium cobalt oxide [LCO]), $LiNiO_2$ (lithium nickelate [LNO]), $LiNi_{0.85}Co_{0.10}Al_{0.05}O_2$ (lithium nickel cobalt aluminum oxide [NCA]), $LiNi_{1/3}Mn_{1/3}Co_{1/3}O_2$ (lithium nickel manganese cobalt oxide [NMC]), $LiNi_{0.5}Mn_{0.5}O_2$ (lithium manganese nickelate), and $Li_2MnO_3$-$LiNiMnCoO_2$.

Examples of the transition metal oxide having a spinel-type structure (MB) include $LiMn_2O_4$ (LMO), $LiNi_{0.5}Mn_{1.5}O_4$ ([LNMO]), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphates such as $LiFePO_4$ ([LFP]) and $Li_3Fe_2(PO_4)_3$; iron pyrophosphates such as $LiFeP_2O_7$; olivine-type manganese phosphates such as $LiMnPO_4$ [(LMP)]; olivine-type nickel phosphates such as $LiNiPO_4$ [(LNP)]; olivine-type cobalt phosphates such as $LiCoPO_4$ [(LCP)]; olivine-type cobalt pyrophosphates such as $Li_2CoP_2O_7$; and monoclinic NASICON-type vanadium phosphates such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

A positive electrode active material obtained using a baking method may be used after being washed with water, an acidic aqueous solution, an alkaline aqueous solution, or an organic solvent.

The positive electrode active material may be surface-coated with a surface coating agent, sulfur, or phosphorus, and further with actinic ray, same as the negative electrode active material described later.

One kind of the positive electrode active material may be used alone, or two or more kinds thereof may be used in combination.

Among these, as the positive electrode active material, $LiCoO_2$ (LCO), $LiMn_2O_4$ (LMO), or $LiNi_{1/3}Mn_{1/3}Co_{1/3}O_2$ (NMC) is preferable.

A suitable aspect of the negative electrode active material will be described below.

(Negative electrode active material)

As the negative electrode active material, a negative electrode active material capable of reversibly intercalating and deintercalating lithium ions is preferable. The negative electrode active material is not particularly limited, and examples thereof include a carbonaceous material, an oxide of a metal element or a metalloid element, a lithium single substance, a lithium alloy, and a negative electrode active material capable of forming an alloy with lithium.

The carbonaceous material used as the negative electrode active material is a material substantially consisting of carbon. Examples thereof include petroleum pitch; carbon black such as acetylene black (AB); graphite (natural graphite and artificial graphite such as vapor-grown graphite); and carbonaceous material obtained by baking various synthetic resins such as a polyacrylonitrile (PAN)-based resin and a furfuryl alcohol resin.

Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

These carbonaceous materials can be classified into non-graphitizable carbonaceous materials (also referred to as "hard carbon") and graphitizable carbonaceous materials, based on the graphitization degree.

In addition, it is preferable that the carbonaceous material has a surface spacing, density, or crystallite size described in JP1987-022066A (JP-S62-022066A), JP1990-006856A (JP-H2-006856A), and JP1991-045473A (JP-H3-045473A). The carbonaceous material is not necessarily a single material, and for example, may be a mixture of natural graphite and artificial graphite described in JP1993-090844A (JP-H5-090844A) or graphite having a coating layer described in JP1994-004516A (JP-H6-004516A).

The carbonaceous material is preferably hard carbon or graphite, and more preferably graphite.

The oxide of a metal element or a metalloid element, which can be used as the negative electrode active material, is not particularly limited as long as it is an oxide capable of intercalating and deintercalating lithium; and examples thereof include an oxide of a metal element (metal oxide) such as $Fe_3O_4$, a composite oxide of a metal element, a composite oxide of a metal element and a metalloid element, and an oxide of a metalloid element (a metalloid oxide). The composite oxide of a metal element and the composite oxide of a metal element and a metalloid element are also collectively referred to as a metal composite oxide.

These oxides are preferably a noncrystalline oxide, and also preferably a chalcogenide which is a reaction product between a metal element and an element of Group 16 of the periodic table.

In the present invention, the metalloid element refers to an element having intermediate properties between those of a metal element and a non-metalloid element, and typically, the metalloid element includes six elements including boron, silicon, germanium, arsenic, antimony, and tellurium, and further includes three elements including selenium, polonium, and astatine.

In addition, the "noncrystalline" of the noncrystalline oxide means an oxide having a broad scattering band with an apex in a range of 20° to 40° in terms of the $2\theta$ value in case of being measured by an X-ray diffraction method using a CuK$\alpha$ ray, and the oxide may have a crystalline diffraction line. The highest intensity in a crystalline diffraction line observed in a range of 40° to 70° in terms of the $2\theta$ value is preferably 100 times or less and more preferably 5 times or less with respect to the intensity of a diffraction line at the apex in a broad scattering band observed in a range of 20° to 40° in terms of the $2\theta$ value, and it is still more preferable that the oxide does not have a crystalline diffraction line.

In the compound group consisting of the noncrystalline oxides and the chalcogenides described above, the noncrystalline oxide of a metalloid element or the above-described chalcogenide is more preferable; and a (composite) oxide consisting of one element or a combination of two or more elements selected from elements (for example, Al, Ga, Si, Sn, Ge, Pb, Sb, and Bi) of Group 13 (IIIB) to Group 15 (VB) of the periodic table or the chalcogenide is particularly preferable.

The noncrystalline oxide and the chalcogenide are preferably $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, or $Sb_2S_5$.

As a negative electrode active material which can be used in combination with the noncrystalline oxide negative electrode active material mainly using Sn, Si, or Ge, a carbonaceous material capable of intercalating and deintercalating lithium ions or lithium metal, a lithium single substance, a lithium alloy, or a negative electrode active material capable of forming an alloy with lithium is preferable.

From the viewpoint of high current density charging and discharging characteristics, it is preferable that the oxide of a metal element or a metalloid element (particularly, the metal (composite) oxide) and the above-described chalcogenide contains at least one of titanium or lithium as a constitutional component.

Examples of the metal composite oxide containing lithium (lithium composite metal oxide) include a composite oxide of lithium oxide and the above-described metal composite oxide or the above-described chalcogenide. More specific examples thereof include $Li_2SnO_2$.

It is also preferable that the negative electrode active material (for example, the metal oxide) contains a titanium element (a titanium oxide). Specifically, $Li_4Ti_5O_{12}$ (lithium titanium oxide [LTO]) is preferable from the viewpoint that the volume variation during the intercalation and deintercalation of lithium ions is small, and thus high-speed charging and discharging characteristics are excellent, and deterioration of electrodes is suppressed, whereby it is possible to improve life of the all-solid-state lithium ion secondary battery.

The lithium alloy as the negative electrode active material is not particularly limited as long as it is typically used as a negative electrode active material for an all-solid-state lithium ion secondary battery, and examples thereof include a lithium aluminum alloy.

The negative electrode active material capable of forming an alloy with lithium is not particularly limited as long as it is typically used as a negative electrode active material for an all-solid-state lithium ion secondary battery. Examples of the above-described negative electrode active material include a negative electrode active material (alloy) containing a silicon element or a tin element and a metal such as Al and In; and a negative electrode active material containing a silicon element (silicon element-containing active material) capable of exhibiting high battery capacity is preferable, and a silicon element-containing active material in which a content of the silicon element is 50 mol% or more with respect to all constitutional elements is more preferable.

In general, a negative electrode containing the negative electrode active material (for example, an Si negative electrode containing the silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage in that the battery driving duration can be extended.

Examples of the silicon element-containing active material include a silicon-containing alloy (for example, $LaSi_2$, $VSi_2$, La-Si, Gd-Si, or Ni-Si) containing a silicon material such as Si and SiOx ($0 < x \leq 1$) and further containing titanium,

EP 4 535 448 A1

vanadium, chromium, manganese, nickel, copper, or lanthanum; and a structured active material thereof (for example, $LaSi_2/Si$). In addition, examples thereof include an active material containing a silicon element and a tin element, such as $SnSiO_3$ and $SnSiS_3$. Since SiOx itself can be used as the negative electrode active material (the metalloid oxide) and Si is produced along with the operation of the all-solid-state lithium ion secondary battery, $SiO_x$ can be used as a negative electrode active material (or a precursor material thereof) capable of forming an alloy with lithium.

Examples of the negative electrode active material containing a tin element include Sn, SnO, $SnO_2$, SnS, $SnS_2$, and the above-described active material containing a silicon element and a tin element.

From the viewpoint of battery capacity, the negative electrode active material is preferably the negative electrode active material capable of forming an alloy with lithium, more preferably the above-described silicon material or the above-described silicon-containing alloy (alloy containing a silicon element), and still more preferably silicon (Si) or a silicon-containing alloy.

It is also preferable to use a titanium niobium composite oxide as the negative electrode active material. It is expected that the titanium niobium composite oxide has a high theoretical volume capacity density, long life, and possibility of rapid charging. Examples of the titanium niobium composite oxide include $TiNb_2O_7$ ([TNO]).

One kind of the negative electrode active material may be used alone, or two or more kinds thereof may be used in combination.

A surface of the negative electrode active material may be coated with an oxide such as another metal oxide and a carbon-based material. These surface coating layers can function as an interface resistance-stabilizing layer.

Examples of the surface coating agent include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

In addition, the surface of the negative electrode active material may be subjected to a surface treatment with sulfur or phosphorus.

Furthermore, the particle surface of the negative electrode active material may be subjected to a surface treatment with an actinic ray or an active gas (for example, plasma) before or after the above-described surface coating.

Among these, as the negative electrode active material, $Li_4Ti_5O_{12}$ (LTO) is preferable.

<Other components>

The electrode composition according to the embodiment of the present invention may contain a component (other components) other than the solid electrolyte and the active material. For example, a conductive auxiliary agent can be contained.

As the conductive auxiliary agent, a conductive auxiliary agent which is known as a general conductive auxiliary agent can be used. Examples of the conductive auxiliary agent include graphite such as natural graphite and artificial graphite, carbon black such as acetylene black, Ketjen black, and furnace black, amorphous carbon such as needle cokes, carbon fiber such as vapor-grown carbon fiber and carbon nanotube, and a carbonaceous material such as graphene and fullerene, which are electron-conductive materials. Furthermore, a conductive polymer such as polyaniline, polypyrrole, polythiophene, polyacetylene, and a polyphenylene derivative may also be used.

In addition to the above-described conductive auxiliary agent, a general conductive auxiliary agent containing no carbon atom, such as metal powder and metal fiber, may be used.

The conductive auxiliary agent refers to a conductive auxiliary agent which does not cause the intercalation and deintercalation of Li at the time of charging and discharging of the battery, and does not function as an active material. As a result, among conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

A content of the conductive auxiliary agent is not particularly limited, and it is, for example, preferably 0% to 10% by mass and more preferably 1% to 8% by mass with respect to the solid content of the electrode composition for a positive electrode active material layer.

A content of the conductive auxiliary agent is not particularly limited, and it is, for example, preferably 0% to 10% by mass and more preferably 1% to 8% by mass with respect to the solid content of the electrode composition for a negative electrode active material layer.

Examples of other components also include a binder.

The binder can include a binder consisting of an organic polymer. The organic polymer constituting the binder may be in a particle shape or may be in a non-particle shape. By containing the binder, it is possible to more reliably prevent the active material layer from cracking or the like.

As the organic polymer constituting the binder, a typical organic polymer used in the electrode composition can be used. The organic polymer may be water-soluble or water-insoluble. Examples of the water-soluble polymer include sodium polyacrylate (PAA-Na), a water-soluble alginic acid derivative, a cellulose-based polymer such as carboxymethyl cellulose, and polyacrylamide.

The binder contained in the electrode composition according to the embodiment of the present invention may contain a copolymer latex. The type of the copolymer latex is not particularly limited, and examples thereof include a conjugated diene-based copolymer such as a styrene-butadiene-based copolymer, an acrylonitrile-butadiene-based copolymer, a methyl methacrylate-butadiene-based copolymer, and a vinylpyridine-butadiene-based copolymer, an acrylic polymer, a vinyl acetate-based polymer, an ethylene-vinyl acetate-based copolymer, a chloroprene polymer, and an aqueous dispersion of natural rubber; and among these, a conjugated diene-based copolymer or an acrylic copolymer is preferable. One kind or two or more kinds thereof can be used. A median diameter of the copolymer latex measured by a photon correlation method is preferably 10 to 500 nm, more preferably 50 to 300 nm, and still more preferably 100 to 200 nm.

The above-described lithium salt may be separately contained as another component instead of being contained as a component of the solid electrolyte (I).

Examples of other components also include a liquid medium.

The electrode composition according to the embodiment of the present invention preferably contains water, and may contain a liquid medium other than water. Examples of the liquid medium other than water include an organic solvent which is miscible with water without going through phase separation in a case where the organic solvent is mixed with water (hereinafter, referred to as a water-soluble organic solvent), and specific examples thereof include N-methylpyrrolidone, methanol, ethanol, acetone, and tetrahydrofuran.

In a case where the electrode composition according to the embodiment of the present invention contains a liquid medium, a content of the solid contents (components other than the liquid medium, such as the solid electrolyte (I) and the active material) in the electrode composition according to the embodiment of the present invention can be adjusted to, for example, 10% to 90% by mass, preferably 20% to 80% by mass and more preferably 30% to 70% by mass. The concentration of the solid contents in the electrode composition according to the embodiment of the present invention can be set to 55% to 90% by mass, preferably 60% to 90% by mass, more preferably 70% to 90% by mass, and still more preferably 75% to 90% by mass.

In a case where the electrode composition according to the embodiment of the present invention is an electrode composition for a positive electrode active material layer, a content of the positive electrode active material in the solid contents of the electrode composition is not particularly limited, and is preferably 10% to 97% by mass, more preferably 30% to 95% by mass, still more preferably 40% to 93% by mass, and particularly preferably 50% to 90% by mass.

In a case where the electrode composition according to the embodiment of the present invention is an electrode composition for a positive electrode active material layer, a content of the solid electrolyte (I) in the solid contents of the electrode composition is not particularly limited, and is preferably 50% to 99.9% by mass, more preferably 70% to 99.5% by mass, and still more preferably 90% to 99% by mass with respect to the total content with the positive electrode active material.

In a case where the electrode composition according to the embodiment of the present invention is an electrode composition for a negative electrode active material layer, a content of the negative electrode active material in the solid contents of the electrode composition is not particularly limited, and is preferably 10% to 90% by mass, more preferably 20% to 85% by mass, still more preferably 30% to 80% by mass, and particularly preferably 40% to 75% by mass.

In a case where the electrode composition according to the embodiment of the present invention is an electrode composition for a negative electrode active material layer, a content of the solid electrolyte (I) in the solid contents of the electrode composition is not particularly limited, and is preferably 50% to 99.9% by mass, more preferably 70% to 99.5% by mass, and still more preferably 90% to 99% by mass with respect to the total content with the negative electrode active material.

The respective contents in the solid contents described above are substantially the same in the active material layer formed of the electrode composition and in the secondary battery using the active material layer.

The electrode composition according to the embodiment of the present invention can be obtained by mixing the solid electrolyte (I) and the active material, and as necessary, the other components described above.

[Electrode sheet for all-solid-state secondary battery]

The electrode sheet for an all-solid-state secondary battery according to the embodiment of the present invention (hereinafter, also referred to as an electrode sheet according to the embodiment of the present invention) includes an active material layer formed of the electrode composition according to the embodiment of the present invention. That is, the electrode sheet according to the embodiment of the present invention contains the above-described solid electrolyte (I) and the above-described active material in the active material layer.

The active material layer of the electrode sheet according to the embodiment of the present invention is preferably formed by subjecting a layer formed of the electrode composition according to the embodiment of the present invention to a pressurization treatment.

The electrode sheet according to the embodiment of the present invention includes an active material layer exhibiting excellent flexibility. That is, since the solid electrolyte (I) is an oxide-based solid electrolyte which can be easily plastically deformed by pressure, it is considered that the solid electrolytes (I) and the active material are closely adhered to each other by the plastic deformation of the solid electrolyte (I), and high flexibility is exhibited. Furthermore, the solid electrolyte (II) itself is soft and plastically deformed to act as a binder, which contributes to the improvement of bonding property between particles, so that it is also possible to form a layer without using a binder such as an organic polymer.

An electrode sheet of a secondary battery is generally configured with a collector and an active material layer, but the electrode sheet according to the embodiment of the present invention may be a single layer of an active material layer, in a case where the active material layer (for example, the layer formed of the electrode composition according to the embodiment of the present invention) also functions as a collector.

The active material layer in the electrode sheet according to the embodiment of the present invention may be a positive electrode active material layer containing a positive electrode active material or a negative electrode active material layer containing a negative electrode active material.

A thickness of the active material layer constituting the electrode sheet according to the embodiment of the present invention is not particularly limited, and can be set to, for example, 10 to 200 $\mu$m, preferably 15 to 150 $\mu$m.

**In** addition, a thickness of the collector constituting the electrode sheet according to the embodiment of the present invention is not particularly limited, and can be set to, for example, 5 to 50 $\mu$m, preferably 8 to 30 $\mu$m.

The collector constituting the electrode sheet according to the embodiment of the present invention is an electron transfer body, and is typically in a form of a sheet. The collector can be appropriately selected according to the active material.

Examples of a constitutional material of the positive electrode collector include aluminum (Al), an aluminum alloy (Al alloy), stainless steel, nickel, and titanium; and aluminum or an aluminum alloy is preferable. Examples of the positive electrode collector include a collector obtained by subjecting a surface of aluminum or stainless steel to a treatment with carbon, nickel, titanium, or silver (collector on which a thin film is formed).

Examples of a constitutional material of the negative electrode collector include aluminum, copper (Cu), a copper alloy, stainless steel, nickel, and titanium; and aluminum, copper, a copper alloy, or stainless steel is preferable. Examples of the negative electrode collector include a collector obtained by subjecting a surface of aluminum, copper, a copper alloy, or stainless steel to a treatment with carbon, nickel, titanium, or silver.

The electrode sheet according to the embodiment of the present invention may include, as other layers, for example, a protective layer such as a peeling sheet and a coating layer.

The electrode sheet according to the embodiment of the present invention can be suitably used as a material forming a negative electrode active material layer or a positive electrode active material layer of a secondary battery, or as a laminate (negative electrode layer) of a negative electrode collector and a negative electrode active material layer or a laminate (positive electrode layer) of a positive electrode collector and a positive electrode active material layer.

[All-solid-state secondary battery]

The all-solid-state secondary battery according to the embodiment of the present invention (hereinafter, also referred to as "secondary battery according to the embodiment of the present invention") is an all-solid-state secondary battery including a positive electrode active material layer, a solid electrolyte layer, and a negative electrode active material layer in this order, in which at least one of the positive electrode active material layer or the negative electrode active material layer has an active material layer formed of the electrode composition according to the embodiment of the present invention. That is, at least one of the positive electrode active material layer or the negative electrode active material layer is an active material layer which contains an amorphous solid electrolyte and an active material (in a case of the positive electrode active material layer, a positive electrode active material, and in a case of the negative electrode active material layer, a negative electrode active material), and the amorphous solid electrolyte contains a metal-containing oxide containing at least one of an alkali metal element or an alkaline earth metal element and an oxygen element, at least one metal salt of an alkali metal salt or an alkaline earth metal salt, and water. Furthermore, a ratio of a median diameter M of the active material to a median diameter N of the solid electrolyte in the active material layer is controlled to $0.05 \leq M/N < 1.2$.

As described above, in the secondary battery according to the embodiment of the present invention, it is sufficient that at least one of the positive electrode active material layer or the negative electrode active material layer is a layer formed of the electrode composition according to the embodiment of the present invention, and the remaining positive electrode active material layer and negative electrode active material layer can be the same as the positive electrode active material layer and the negative electrode active material layer in a typical all-solid-state secondary battery. Both the positive electrode active material layer and the negative electrode active material layer can be the layer formed of the electrode composition according to the embodiment of the present invention.

Thicknesses of the positive electrode active material layer and the negative electrode active material layer constituting the secondary battery according to the embodiment of the present invention are the same as the thickness of the active material layer in the electrode sheet according to the embodiment of the present invention, and a preferred range thereof is also the same.

The solid electrolyte layer constituting the secondary battery according to the embodiment of the present invention is not particularly limited, and can have the same configuration as the solid electrolyte layer in a typical all-solid-state secondary battery. From the viewpoint of improving ion conductivity and flexibility, it is preferable to use the above-described solid electrolyte (I) as the solid electrolyte, and it is more preferable to use the solid electrolyte (II). The solid electrolyte layer may contain the above-described "binder", the above-described "other solid electrolytes", and the like, in addition to the solid electrolyte (I).

A thickness of the solid electrolyte layer constituting the secondary battery according to the embodiment of the present invention is not particularly limited, and can be set to, for example, 5 to 1,000 μm, preferably 10 to 100 μm.

The secondary battery according to the embodiment of the present invention is preferably a so-called all-solid-state lithium ion secondary battery. It is preferable that the solid electrolyte (II) is used in any of the positive electrode active material layer, the solid electrolyte layer, and the negative electrode active material layer.

Materials, members, and the like used for the secondary battery according to the embodiment of the present invention are not particularly limited as long as the secondary battery according to the embodiment of the present invention includes the above-described specific positive electrode active material layer, solid electrolyte layer, and negative electrode active material layer. A material or a member which is used in a typical all-solid-state secondary battery can be used.

[Manufacturing method of electrode sheet for all-solid-state secondary battery]

The manufacturing method of the electrode sheet for a secondary battery according to the embodiment of the present invention can be performed with reference to a typical manufacturing method of an electrode sheet for an all-solid-state secondary battery, except that an active material layer is formed of the electrode composition according to the embodiment of the present invention. That is, the manufacturing method of the electrode sheet according to the embodiment of the present invention includes forming an active material layer using the electrode composition according to the embodiment of the present invention.

Specifically, the active material layer can be formed by applying the electrode composition (electrode slurry) according to the embodiment of the present invention to form a layer.

In a case where a collector is used, the active material layer can be formed by applying the electrode composition according to the embodiment of the present invention onto the collector to form a coating layer.

In a case where the electrode composition contains a dispersion medium (liquid medium), the coating layer can be dried to form the active material layer. The drying method is not particularly limited, and for example, the drying can be performed using a desiccator, by vacuum drying, by freeze vacuum drying, or by a heat treatment.

In addition, the active material layer can also be formed by simply pressure-molding the electrode composition according to the embodiment of the present invention to form a layer. For example, the active material layer can be formed by filling a predetermined mold with powder of the electrode composition according to the embodiment of the present invention, and performing pressure molding.

The active material layer is preferably subjected to a pressurization treatment. Conditions of the pressurization treatment are not particularly limited, but the pressurization treatment is preferably performed at 1 to 300 MPa and more preferably performed at 3 to 200 MPa. It is preferable that the pressurization treatment is performed after the active material layer is formed in a layer shape.

In the pressurization treatment, the layer of the electrode composition (the active material layer before the pressurization treatment) may be subjected to the pressurization treatment alone, or may be subjected to the pressurization treatment in a state of being laminated with another layer. For example, the pressurization treatment may be performed after forming a laminate of electrode composition layer for forming a positive electrode active material layer/solid electrolyte layer/electrode composition layer for forming a negative electrode active material layer.

A method of the pressurization treatment is not particularly limited, and the pressurization treatment may be performed by pressing or may be performed by sealing while pressurizing in a container.

[Manufacturing method of all-solid-state secondary battery]

The manufacturing method of the secondary battery according to the embodiment of the present invention can be performed with reference to a typical manufacturing method of an all-solid-state secondary battery, except that at least one of a positive electrode active material layer or a negative electrode active material layer is formed of the electrode composition according to the embodiment of the present invention. That is, the manufacturing method of the secondary battery according to the embodiment of the present invention is a manufacturing method of an all-solid-state secondary battery in which a positive electrode active material layer, a solid electrolyte layer, and a negative electrode active material layer are arranged in this order, the manufacturing method including forming at least one of the positive electrode active material layer or the negative electrode active material layer is formed of the electrode composition for a battery according to the embodiment of the present invention.

The positive electrode active material layer and the negative electrode active material layer can be formed by referring to the description of [Manufacturing method of electrode sheet for all-solid-state secondary battery] above as appropriate.

A method of forming the laminate in which the positive electrode active material layer, the solid electrolyte layer, and the negative electrode active material layer are arranged in this order is not particularly limited. For example, a composition for forming a positive electrode (positive electrode slurry) containing a positive electrode active material is applied onto a metal foil which is a positive electrode collector layer to form a positive electrode active material layer, a dispersion liquid for forming a solid electrolyte layer (solid electrolyte slurry) containing a solid electrolyte is applied onto the positive electrode active material layer to form a solid electrolyte layer, a composition for forming a negative electrode (negative electrode slurry) containing a negative electrode active material is applied onto the solid electrolyte layer to form a negative electrode active material layer, and a negative electrode collector layer (metal foil) is laminated on the negative electrode active material layer. The entire laminate is optionally subjected to a pressurization treatment to obtain the all-solid-state secondary battery as shown in Fig. 1.

In addition, the all-solid-state secondary battery can also be manufactured by reversing the method of forming each layer, which includes forming the negative electrode active material layer, the solid electrolyte layer, and the positive electrode active material layer on the negative electrode collector layer, laminating the positive electrode collector layer (metal foil) on the positive electrode active material layer, and optionally subjecting the entire laminate to a pressurization treatment.

As another method, the all-solid-state lithium ion secondary battery can also be manufactured by separately producing the positive electrode active material layer, the solid electrolyte layer, and the negative electrode active material layer, laminating these layers between the positive electrode collector layer and the negative electrode collector layer to be arranged in order of the positive electrode collector layer (metal foil), the positive electrode active material layer, the solid electrolyte layer, the negative electrode active material layer, and the negative electrode collector layer (metal foil), and optionally subjecting to a pressurization treatment.

In this case, in the formation of each layer, a support such as a nonwoven fabric may be disposed as necessary, and each layer can be made into a self-supporting film. **In** a case where the all-solid-state lithium ion secondary battery is manufactured by laminating the respective layers, the support in the self-supporting film is preferably removed and used.

Conditions of the pressurization treatment are not particularly limited, and the pressurization treatment can be performed under the same conditions and by the same method as those in the manufacturing method of the electrode sheet according to the embodiment of the present invention.

The pressurization treatment may be performed on the layer itself formed of the electrode composition, or in a case where the layers are laminated as described above, the pressurization treatment may be performed in a state in which the layers are laminated.

The secondary battery according to the embodiment of the present invention is not limited to the above-described methods as long as the secondary battery specified in the present invention can be obtained.

In the manufacturing of the secondary battery according to the embodiment of the present invention, it is possible to form a layer in which the interface resistance between the solid particles or between the layers is suppressed by the action of the above-described oxide-based solid electrolyte (I) capable of being easily plastically deformed with pressure, even in a case where the sulfide-based solid electrolyte is not used as the solid electrolyte.

The solid electrolyte (I) itself is soft and plastically deformed to act as a binder, which contributes to the improvement of bonding property between the solid particles or between the layers, so that it is also possible to form a layer without using a binder such as an organic polymer.

It is preferable that the secondary battery according to the embodiment of the present invention is initialized after manufacturing or before use. The initialization method is not particularly limited, and it is possible to initialize the all-solid-state secondary battery by, for example, performing initial charging and discharging in a state in which a pressing pressure is increased and then releasing the pressure until the pressure falls within the range of the pressure condition at the time of using the all-solid-state secondary battery.

[Applications of secondary battery]

The secondary battery according to the embodiment of the present invention can be applied to various applications. The application aspect is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, in a case of being used for consumer applications, examples thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the secondary battery according to the embodiment of the present invention can be used for various military usages and universe usages. In addition, the secondary battery according to the embodiment of the present invention can also be combined with a solar battery.

The present invention will be more specifically described based on Examples, but the present invention is not limited and interpreted to Examples.

Examples

[Reference Example 1: production by steps 0 and 1A to 3A described above]

Using a ball mill (manufactured by FRITSCH, planetary ball mill P-7), powdery $Li_2B_4O_7$ crystals (LBO powder) (manufactured by RARE METALLIC Co., Ltd.) were subjected to ball milling under the following conditions, pot: stabilized zirconia (YSZ) (45 mL), pulverization ball: YSZ (average particle diameter: 5 mm, number of balls: 50 balls), rotation speed: 370 revolutions per minute (rpm), amount of LBO powder: 1 g, atmosphere: air, and treatment time of ball milling: 100 hours, thereby obtaining a fined lithium-containing oxide (hereinafter, also referred to as "fine substance of the lithium-containing oxide").

0.05 g (which was 5% by mass with respect to the fine substance of the lithium-containing oxide) of LiFSI (chemical formula: $Li(FSO_2)_2N$) as a lithium salt was added to 1 g of the obtained fine substance of the lithium-containing oxide, and the mixture was further ball-milled for 100 hours. The obtained powder was added to water such that a powder concentration was 42% by mass, and the mixture was subjected to ultrasonic dispersion for 30 minutes. Subsequently, the obtained dispersion liquid was transferred to a glass petri dish, and dried at 120°C for 2 hours in the air to obtain a film of solid electrolyte. Subsequently, the obtained film was peeled off to obtain a powdery solid electrolyte (II)-1.

<Production and evaluation of molded body of solid electrolyte>

The powdery solid electrolyte (II)-1 obtained above was subjected to powder compaction molding at an effective pressure of 220 MPa at 27°C (room temperature) to obtain a molded body (a compacted powder body 1) of the solid electrolyte. A shape of the compacted powder body 1 was a columnar shape having a diameter of 10 mm and a thickness of 1 mm. As a result of measuring ion conductivity of the obtained compacted powder body 1, the ion conductivity of the compacted powder body 1 was $1.5 \times 10^{-4}$ S/cm at 27°C and $4.0 \times 10^{-4}$ S/cm at 60°C.

The above-described ion conductivity of the solid electrolyte (II)-1 was calculated by arranging two electrodes consisting of an In foil to sandwich the compacted powder body 1, measuring an alternating current impedance between both In electrodes in a measurement frequency range of 1 Hz to 1 MHz under conditions of a measurement temperature of 27°C or 60°C and an applied voltage of 50 mV, and then analyzing the arc diameter of the obtained Cole-Cole plot (Nyquist plot).

An X-ray diffraction measurement of the solid electrolyte (II)-1 was performed using a $CuK\alpha$ ray as described above. The measurement conditions were set to 0.01 °/step and 3 °/min. As a result, it was clarified that the above-described X-ray diffraction characteristics were satisfied, and it was found that the solid electrolyte (II)-1 was in an amorphous state.

Using the solid electrolyte (II)-1 obtained above, an X-ray total scattering measurement was performed with SPring-8 L04B2 (acceleration voltage: 61.4 keV, wavelength: 0.2019 Å). The sample was sealed in a Capton capillary of 2 mm$\varphi$ or 1 mm$\varphi$, and the experiment was performed. The obtained data were subjected to Fourier transform as described above to obtain a reduced pair distribution function.

As a result of the analysis, in the reduced pair distribution function G(r) obtained from the X-ray total scattering measurement, it was confirmed that, in a range where r was 1 to 5 Å, a first peak in which G(r) of the peak top was more than 1.0 and the peak top was located at 1.43 Å and a second peak in which G(r) of the peak top was more than 1.0 and the peak top was located at 2.40 Å were observed.

On the other hand, in the solid electrolyte (II)-1, the peak attributed to the B-O interatomic distance and the B-B interatomic distance, observed in the general lithium tetraborate crystal, was maintained. The general lithium tetraborate crystal has a structure (diborate structure) in which a $BO_4$ tetrahedron and a $BO_3$ triangle are present at a ratio of 1:1, and it is presumed that this structure is maintained in the solid electrolyte (II)-1.

A proportion {(Full-width 2 at half maximum/Full-width 1 at half maximum) $\times$ 100} of a full-width at half maximum (full-width 2 at half maximum) of a peak in which a chemical shift appeared in a range of -100 to +100 ppm in a spectrum obtained in a case where the solid $^7$Li-NMR measurement of the solid electrolyte (II)-1 obtained above was performed at 120°C with respect to a full-width at half maximum (full-width 1 at half maximum) of a peak in which a chemical shift appeared in a range of -100 to +100 ppm in a spectrum obtained in a case where the solid $^7$Li-NMR measurement of the solid electrolyte (II)-1 obtained above was performed at 20°C was 33%.

In addition, in a case where the first peak appearing in a range of -100 to +100 ppm in the spectrum obtained in a case where the solid $^7$Li-NMR measurement was performed at 20°C was waveform-separated, a second peak having a full-width at half maximum of 5 ppm or less appeared in a range with a chemical shift of -3 to 3 ppm, and a proportion of an area intensity of the second peak to an area intensity of the first peak was 4%.

Using the solid electrolyte (II)-1 obtained above, an infrared absorption spectrum measurement was performed under the conditions described above, and as a result, in the obtained infrared absorption spectrum, a value of a ratio of a maximum absorption intensity in a wave number range of 3,000 to 3,500 cm$^{-1}$ to a maximum absorption intensity in a wave number range of 800 to 1,600 cm$^{-1}$ was 0.72.

In the Raman spectrum of the solid electrolyte (II)-1 obtained above, the coefficient of determination obtained by performing linear regression analysis according to a least-squares method in a wave number range of 600 to 850 cm$^{-1}$ was 0.9974.

The mass reduction rate of the solid electrolyte (II)-1 in a case of being heated from 25°C to 800°C as described above was 29.8%.

Regarding the analysis of each of elements in the obtained solid electrolyte (II)-1, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the powder. The results are shown in the table below.

[Reference Example 2: production by steps 1B to 3B and method 2 described above]

1 g of the fine substance of the lithium-containing oxide used in Reference Example 1 was added to water such that a concentration of the fine substance was 42% by mass, and the mixture was subjected to ultrasonic dispersion for 30 minutes. 0.05 g (which was 5% by mass with respect to the fine substance of the lithium-containing oxide) of LiFSI (chemical formula: Li(FSO$_2$)$_2$N) as a lithium salt was added to the obtained dispersion liquid, and the mixture was further subjected to ultrasonic dispersion for 30 minutes.

The obtained dispersion liquid was transferred to a glass petri dish, and dried at 120°C for 2 hours in the air to obtain a film of solid electrolyte. Subsequently, the obtained film was peeled off to obtain a powdery solid electrolyte (II)-2. Various evaluations were performed on the solid electrolyte (II)-2 in the air in the same manner as in Reference Example 1. The results are summarized in the tables below.

[Reference Example 3: production by steps 1B to 3B and method 3 described above]

Using a ball mill (manufactured by FRITSCH, planetary ball mill P-7), powdery Li$_2$B$_4$O$_7$ (LBO powder) (manufactured by RARE METALLIC Co., Ltd.) was subjected to ball milling under the following conditions, pot: YSZ (45 mL), pulverization ball: YSZ (average particle diameter: 5 mm, weight: 70 g), rotation speed: 530 revolutions per minute (rpm), amount of LBO powder: 4.2 g, atmosphere: air, and treatment time of ball milling: 100 hours, thereby obtaining a fine substance of a lithium-containing oxide.

The obtained fine substance of the lithium-containing oxide was added to water such that a concentration of the fine substance was 42% by mass, and the mixture was subjected to ultrasonic dispersion for 60 minutes to obtain a dispersion liquid 1.

Next, 3.25 g of LiFSI (chemical formula: Li(FSO$_2$)$_2$N) as a lithium salt was added to water such that a concentration was 87% by mass, and the mixture subjected to an ultrasonic treatment for 60 minutes to obtain a solution 2.

The obtained dispersion liquid 1 and solution 2 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (II)-3. The obtained powder was allowed to stand in the air for a certain period of time, and various evaluations were performed in the air in the same manner as in Reference Example 1 using the solid electrolyte (II)-3. The results are summarized in the tables below.

[Reference Example 4: production by steps 1B to 3B and method 3 described above]

A dispersion liquid 3 was obtained in the same manner as in the preparation of the dispersion liquid 1 in Reference Example 3.

Next, 2.32 g of LiFSI (chemical formula: $Li(FSO_2)_2N$) as a lithium salt was added to water such that a concentration was 87% by mass, and the mixture subjected to an ultrasonic treatment for 60 minutes to obtain a solution 4.

The obtained dispersion liquid 3 and solution 4 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (II)-4. The obtained powder was allowed to stand in the air for a certain period of time, and various evaluations were performed in the air in the same manner as in Reference Example 1 using the solid electrolyte (II)-4. The results are summarized in the tables below.

[Reference Example 5: production by steps 1B to 3B and method 3 described above]

A dispersion liquid 5 was obtained in the same manner as in the preparation of the dispersion liquid 1 in Reference Example 3.

Next, 4.65 g of LiFSI (chemical formula: $Li(FSO_2)_2N$) as a lithium salt was added to water such that a concentration was 87% by mass, and the mixture subjected to an ultrasonic treatment for 60 minutes to obtain a solution 6.

The obtained dispersion liquid 5 and solution 6 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (II)-5. Various evaluations were performed in the air in the same manner as in Reference Example 1 using the obtained powdery solid electrolyte (II)-5 as soon as possible. The results are summarized in the tables below.

[Reference Example 6: production by steps 1B to 3B and method 3 described above]

A dispersion liquid 7 was obtained in the same manner as in the preparation of the dispersion liquid 1 in Reference Example 3.

Next, 7.13 g of LiTFSI (chemical formula: $Li(F_3CSO_2)_2N$) as a lithium salt was added to water such that a concentration was 87% by mass, and the mixture subjected to an ultrasonic treatment for 60 minutes to obtain a solution 8.

The obtained dispersion liquid 7 and solution 8 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (II)-6. The obtained powder was allowed to stand in the air for a certain period of time, and various evaluations were performed in the air in the same manner as in Reference Example 1 using the solid electrolyte (II)-6. The results are summarized in the tables below.

In Reference Example 6, the carbon amount shown in Table 1 below was estimated from the analytical mass of sulfur in consideration of the amount of each of atoms in the lithium salt.

[Comparative Reference Example 1]

As a result of performing the element analysis on the LBO powder used in Reference Example 1 (powdery $Li_2B_4O_7$ crystals not subjected to the ball milling), the composition of the obtained LBO powder was $Li_{1.96}B_{4.00}O_{6.80}$. The LBO powder was subjected to powder compaction molding at an effective pressure of 220 MPa at room temperature (27°C) to obtain a compacted powder body C1 for comparative reference. The ion conductivity of the obtained compacted powder body C1 could not be detected.

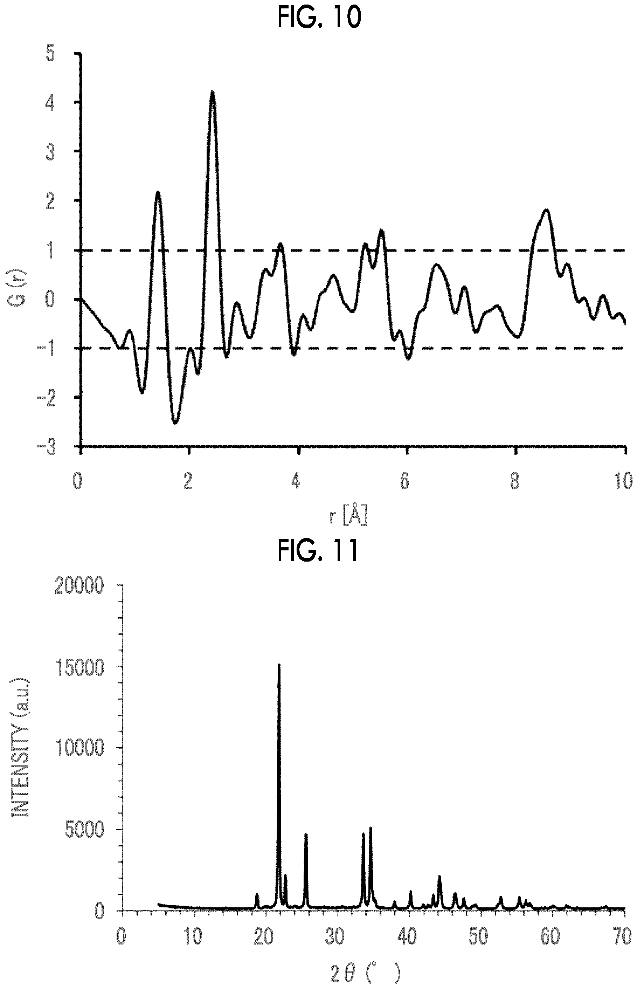

In addition, in the same manner as in Reference Example 1, the X-ray total scattering measurement was performed using the LBO powder to obtain a reduced pair distribution function G(r). Fig. 10 shows the reduced pair distribution function G(r) obtained from the LBO powder.

As a result of analysis, in the reduced pair distribution function G(r) of the LBO powder obtained from the X-ray total scattering measurement, a first peak (corresponding to the B-O proximity) in which a peak top was located at 1.40 Å and a second peak (corresponding to the B-B proximity) in which a peak top was located at 2.40 Å were present, and G(r) of the peak top of the first peak and G(r) of the peak top of the second peak were 1.0 or more (see Fig. 10). In addition, other peaks in which peak tops were located at 3.65 Å, 5.22 Å, 5.51 Å, and 8.54 Å were present, and the absolute value of G(r) of the peak top of each of the peaks was clearly more than 1.0 (see Fig. 10).

The LBO powder of Comparative Reference Example 1 was subjected to X-ray diffraction measurement using a CuK$\alpha$ ray. The measurement conditions were set to 0.01 °/step and 3 °/min.

Fig. 11 shows an X-ray diffraction pattern of the LBO powder of Comparative Reference Example 1. As shown in Fig. 11, a plurality of peaks having a small width were observed in the LBO powder used in Comparative Reference Example 1. More specifically, the strongest peak corresponding to (1,1,2) plane was observed at a position of 21.78° in terms of the 2$\theta$ value. Other major diffraction peaks observed were a peak corresponding to (2,0,2) plane at a position of 25.54°, a peak corresponding to (2,1,3) plane at a position of 33.58°, and a peak corresponding to (3,1,2) plane at a position of 34.62°; and intensities of these three peaks were substantially the same. These peaks were derived from the crystalline component.

[Comparative Reference Example 2]

As a result of the element analysis of the fine substance of the lithium-containing oxide (powdery $Li_2B_4O_7$ crystals subjected to ball milling) prepared in Reference Example 1, the composition of the fine substance of the lithium-containing oxide was $Li_{1.94}B_{4.00}O_{6.80}$.

Next, the above-described fine substance of the lithium-containing oxide was subjected to powder compaction molding at an effective pressure of 220 MPa at 27°C (room temperature) to obtain a compacted powder body (compact powder body R1) for comparative reference. The ion conductivity of the obtained compacted powder body R1 was $7.5 \times 10^{-9}$ S/cm at 27°C and $7.5 \times 10^{-8}$ S/cm at 60°C.

In the column of "Short distance G(r)" of the tables below, with regard to the reduced pair distribution function G(r) of the solid electrolyte (I) obtained from an X-ray total scattering measurement as described above, a case where a first peak in which a peak top was located in a range where r is $1.43 \pm 0.2$ Å and a second peak in which a peak top was located in a range where r is $2.40 \pm 0.2$ Å were present, and both G(r) of the peak top of the first peak and G(r) of the peak top of the second peak were more than 1.0 is indicated by "A", and other cases are indicated by "B".

In Reference Examples 1 to 5 and 9 to 13 shown in the tables below, the value of G(r) of the peak top of the first peak was 1.2 or more.

In addition, in the column of "Long distance G(r)", with regard to the above-described reduced pair distribution function G(r), a case where the absolute value of G(r) was less than 1.0 in a range where r was more than 5 Å and 10 Å or less is indicated by "A", and a case where the absolute value of G(r) was not less than 1.0 is indicated by "B".

In addition, as a result of the above-described X-ray diffraction characteristics using a CuK$\alpha$ ray, a case where the above-described X-ray diffraction characteristics were satisfied was indicated by "A", and a case where the above-described X-ray diffraction characteristics were not satisfied was indicated by "B". In Reference Examples 1 to 6 shown in the tables below and Reference Examples 7 to 13 described later, in the X-ray diffraction pattern, none of the first peak, the second peak, the third peak, and the fourth peak were present, or the intensity ratio of at least one peak of the first peak, the second peak, the third peak, or the fourth peak was 2.0 or less.

In the tables below, the column of "Element analysis" indicates the molar amount of each element as a relative value in which the content of B was set to "4.00", in the composition of the solid electrolyte (II) obtained in each of Reference Examples and the lithium-containing oxide in each of Comparative Reference Examples.

In the tables below, a blank means that the corresponding element was not contained.

In the tables below, "Proportion of full-width at half maximum (%)", "Coefficient of determination", and "Mass reduction rate (%)" are as described above in Reference Example 1.

In the tables below, "Proportion of area intensity" is a proportion of the area intensity of the second peak to the area intensity of the first peak in the above-described solid $^7$Li-NMR measurement, and the evaluation results based on the following standards are described.

<Standard for proportion of area intensity>

A: case where the proportion of the area intensity was 15% or more

B: case where the proportion of the area intensity was 0.5% or more and less than 15%

C: case where the proportion of the area intensity was less than 0.5%

In the tables below, the column of "Maximum absorption intensity ratio" indicates whether or not the above-described infrared absorption spectral characteristics were satisfied; and a case where [Maximum absorption intensity in wave number range of 3000 to 3500 $cm^{-1}$]/[Maximum absorption intensity in wave number range of 800 to 1600 $cm^{-1}$] was 0.20 or more is indicated by "A", and a case of being less than 0.20 is indicated by "B".

In the tables below, "-" means that the measured value is not obtained.

[Table 1]

| | Element composition of solid electrolyte | | | | | | |
|---|---|---|---|---|---|---|---|
| | Li | B | O | F | s | N | C |
| Reference Example 1 | 1.94 | 4.00 | 10.66 | 0.03 | 0.02 | 0.01 | |
| Reference Example 2 | 2.04 | 4.00 | 11.09 | 0.06 | 0.05 | 0.02 | |
| Reference Example 3 | 2.70 | 4.00 | 20.90 | 1.36 | 1.38 | 0.69 | |
| Reference Example 4 | 2.50 | 4.00 | 19.90 | 0.95 | 0.98 | 0.49 | |
| Reference Example 5 | 3.00 | 4.00 | 17.10 | 1.95 | 1.98 | 0.99 | |
| Reference Example 6 | 2.90 | 4.00 | 21.45 | 5.00 | 1.90 | 0.95 | 1.90 |
| Comparative Reference Example 1 | 1.96 | 4.00 | 6.80 | | | | |
| Comparative Reference Example 2 | 1.94 | 4.00 | 6.80 | | | | |

[Table 2]

| | Proportion of full-width at half maximum (%) | Proportion of area intensity | Maximum absorption intensity ratio | Coefficient of determination | Mass reduction rate (%) | Short distance G(r) | Long distance G(r) | X-ray diffraction characteristics | Ion conductivity (S/cm) | |
|---|---|---|---|---|---|---|---|---|---|---|
| | | | | | | | | | 27°C | 60°C |
| Reference Example 1 | 33 | B | A | 0.9974 | 29.8 | A | A | A | $1.5 \times 10^{-4}$ | $4.0 \times 10^{-4}$ |
| Reference Example 2 | - | A | A | 0.9908 | 30 | A | - | A | $1.1 \times 10^{-3}$ | $4.0 \times 10^{-3}$ |
| Reference Example 3 | - | A | A | - | - | A | A | A | $4.7 \times 10^{-3}$ | - |
| Reference Example 4 | - | A | A | - | - | A | - | A | $4.1 \times 10^{-3}$ | - |
| Reference Example 5 | - | A | A | - | - | A | - | A | $3.0 \times 10^{-3}$ | - |
| Reference Example 6 | - | B | A | - | - | - | - | A | $7.4 \times 10^{-4}$ | - |
| Comparative Reference Example 1 | 100 | C | B | 0.1660 | 0.2 | A | B | B | Undetectable | Undetectable |
| Comparative Reference Example 2 | 46 | C | B | 0.9677 | - | A | A | A | $7.5 \times 10^{-9}$ | $7.5 \times 10^{-8}$ |

As shown in the above tables, it was found that the solid electrolytes (II)-1, (II)-2, (II)-3, (II)-4, (II)-5, and (II)-6 of Reference Examples 1 to 6 had excellent ion conductivity. In addition, from the results of the element analysis, it was found that the content of Li in the solid electrolyte was higher in Reference Examples 3 to 6. In Reference Examples 3 to 6, the aqueous dispersion liquid containing the lithium-containing oxide subjected to the mechanical milling treatment and the aqueous solution containing the lithium salt were mixed (the method 3 in the step 2B described above), and it is presumed that a larger amount of the lithium salt can be mixed, and as a result, the amount of Li incorporated into the solid electrolyte is increased. In addition, it was also found that the ion conductivity was further improved in Reference Examples 3, 4, and 5, in which LiFSI was used as the lithium salt. This is presumed to be because the increased Li includes Li having high mobility.

<Influence of water in solid electrolyte>

The compacted powder body (pellet) (diameter: 10 mm, 0.9 mm-thick) of the solid electrolyte (II)-3 obtained in Reference Example 3 was vacuum-dried at 27°C under a restraint of 60 MPa, and a pressure change and an ion conductivity with respect to a vacuum drying time were examined. The method of producing the compacted powder body and the evaluation of the ion conductivity are as described above, except that the In electrode is changed to the Ti electrode. The results are shown in Table 3.

[Table 3]

| Vacuum drying time (min) | Pressure (Pa) | Ion conductivity (27°C, S/cm) |
| --- | --- | --- |
| 0 | 101325 | $4.8 \times 10^{-3}$ |
| 5 | 200 | $3.8 \times 10^{-3}$ |
| 20 | 20 | $3.3 \times 10^{-3}$ |
| 50 | 10 | $2.6 \times 10^{-3}$ |
| 1080 | 15 | $5.7 \times 10^{-4}$ |

In the solid electrolyte (II)-3 of Reference Example 3, an absorption intensity derived from an O-H stretching peak was strongly observed in a wave number range of 3,000 to 3,500 $cm^{-1}$ in the infrared absorption spectrum, and thus it is considered that a large number of OH groups and water were present. In addition, it is presumed that water was present as free water and bound water. In the above, the pellets were dried under conditions that the pellets were considered to be volatilized from the free water by vacuum drying first, and the pellets were further dried under more severe drying conditions; and the ion conductivity in each stage was evaluated.

As shown in the above table, it is considered that the pressure was 200 Pa and the free water was in a vaporized state in a drying time of 5 minutes, but the ion conductivity was a high value of $3.8 \times 10^{-3}$ S/cm, and even in a drying time of 1,080 minutes and a pressure of 15 Pa, the ion conductivity was $5.7 \times 10^{-4}$ S/cm. This result indicates that bound water other than free water was present and contributed to the ion conductivity.

[Reference Example 7: production by steps 1B to 3B and method 3 described above]

A dispersion liquid 9 in which the concentration of the fine substance of the lithium-containing oxide was 42% by mass was obtained in the same manner as in the preparation of the dispersion liquid 1 in Reference Example 3 described above.

Next, 7.12 g of LiTFSI (chemical formula: $Li(F_3CSO_2)_2N$) as a lithium salt was added to water such that a concentration was 87% by mass, and the mixture subjected to an ultrasonic treatment for 60 minutes to obtain a solution 10.

The obtained dispersion liquid 9 and solution 10 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (II)-7. The obtained powder was allowed to stand in the air for a certain period of time, and various evaluations were performed in the air in the same manner as in Reference Example 1 using the solid electrolyte (II)-7. The results are summarized in the tables below.

[Reference Example 8]

A solid electrolyte (II)-8 was obtained in the same manner as in Reference Example 7, except that the content of water and LiTFSI in the obtained solid electrolyte (II) was changed to the amount shown in the table below; and various

evaluations were performed in the air in the same manner as in Reference Example 1. The results are summarized in the tables below.

[Reference Examples 9 to 13]

**[0337]** Solid electrolytes (I)-9 to (I)-13 were obtained in the same manner as in Reference Example 7, except that LiTFSI was changed to LiFSI, and the content of water and LiFSI in the obtained solid electrolyte (II) was changed to the amount shown in the table below; and various evaluations were performed in the air in the same manner as in Reference Example 1. The results are summarized in the tables below. However, in Reference Example 13, the evaluation was performed in the air on the powder obtained by vacuum drying as soon as possible.

**[0338]** In the tables below, the columns of "Fine substance of lithium-containing oxide", "Lithium salt", and "Water" indicate relative molar ratios. For example, in Reference Example 7, the molar ratio of the lithium salt to the fine substance of the lithium-containing oxide was 1, and the molar ratio of the water to the fine substance of the lithium-containing oxide was 11. The above-described molar ratio was calculated by the following method.

**[0339]** Regarding the analysis of each of elements, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the solid electrolyte. In Reference Examples 7 and 8, the carbon amount was estimated from the analytical mass of sulfur in consideration of the amount of each of atoms in the lithium salt. The molar ratio of the fine substance of the lithium-containing oxide in the solid electrolyte to the lithium salt was calculated from the molar ratio of an element (for example, B) which is present only in the fine substance of the lithium-containing oxide to an element which is present only in the lithium salt. In addition, the molar ratio of the fine substance of the lithium-containing oxide to the water was calculated by subtracting the molar ratio of O, contained in the fine substance of the lithium-containing oxide and the lithium salt, from the molar ratio of O in the solid electrolyte to calculate the molar amount of O derived from water, and using the obtained molar amount of O derived from water and the molar amount of the fine substance of the lithium-containing oxide.

[Table 4]

| | Fine substance of the lithium-containine oxide | Lithium salt | Water |
|---|---|---|---|
| Comparative Reference Example 2 | 1 | 0 | 0 |
| Reference Example 7 | 1 | 1 | 11 |
| Reference Example 8 | 1 | 1.2 | 11 |
| Reference Example 9 | 1 | 0.01 | 4 |
| Reference Example 10 | 1 | 0.03 | 4 |
| Reference Example 11 | 1 | 0.5 | 11 |
| Reference Example 12 | 1 | 0.7 | 11 |
| Reference Example 13 | 1 | 1.0 | 6 |

**[0340]** In addition, the content (% by mass) of each component in the solid electrolyte (II) was calculated based on the molar amount and the molecular weight shown in Table 4. The results are shown in Table A.

[Table A]

| | Fine substance of the lithium-containing oxide | Lithium salt | Water |
|---|---|---|---|
| Comparative Reference Example 2 | 100 | 0 | 0 |
| Reference Example 7 | 26 | 44 | 30 |
| Reference Example 8 | 24 | 48 | 28 |
| Reference Example 9 | 70 | 1 | 29 |
| Reference Example 10 | 69 | 2 | 29 |
| Reference Example 11 | 37 | 20 | 43 |
| Reference Example 12 | 34 | 26 | 40 |

(continued)

| | Fine substance of the lithium-containing oxide | Lithium salt | Water |
|---|---|---|---|
| Reference Example 13 | 36 | 40 | 24 |

[Table 5]

| | Proportion of full-width at half maximum (%) | Proportion of area intensity | Maximum absorption intensity ratio | Coefficient of determination | Mass reduction rate (%) | Short distance G(r) | Long distance G(r) | X-ray diffraction characteristics | Ion conductivity (S/cm) | |
|---|---|---|---|---|---|---|---|---|---|---|
| | | | | | | | | | 27°C | 60°C |
| Comparative Reference Example 2 | 46 | C | B | 0.9677 | - | A | A | A | $7.5 \times 10^{-9}$ | $7.5 \times 10^{-8}$ |
| Reference Example 7 | - | B | A | - | - | - | - | A | $7.4 \times 10^{-4}$ | - |
| Reference Example 8 | - | B | A | - | - | - | - | A | $7.2 \times 10^{-4}$ | - |
| Reference Example 9 | 33 | B | A | 0.9974 | 29.8 | A | - | A | $1.5 \times 10^{-4}$ | $4.0 \times 10^{-4}$ |
| Reference Example 10 | - | A | A | 0.9908 | 30 | A | - | A | $1.1 \times 10^{-3}$ | $4.0 \times 10^{-3}$ |
| Reference Example 11 | - | A | A | - | - | A | - | A | $4.1 \times 10^{-3}$ | - |
| Reference Example 12 | - | A | A | - | - | A | - | A | $4.7 \times 10^{-3}$ | - |
| Reference Example 13 | - | A | A | - | - | A | - | A | $3.0 \times 10^{-3}$ | - |

As shown in the above tables, the solid electrolyte of each of Reference Examples had desired characteristics or physical properties, and exhibited excellent ion conductivity.

<Preparation of electrode composition (slurry)>

(Example 1-1)

1. Preparation of solid electrolyte

Using a ball mill (manufactured by FRITSCH, planetary ball mill P-7), powdery $Li_2B_4O_7$ crystals (LBO powder) (manufactured by RARE METALLIC Co., Ltd.) were subjected to ball milling under the following conditions, pot: stabilized zirconia (YSZ) (45 mL), pulverization ball: YSZ (average particle diameter: 5 mm, number of balls: 50), rotation speed: 370 revolutions per minute (rpm), amount of LBO powder: 1 g, atmosphere: air, and treatment time of ball milling: 100 hours, thereby obtaining a fined lithium-containing oxide.

0.05 g (which was 5% by mass with respect to the fine substance of the lithium-containing oxide) of LiFSI (chemical formula: $Li(FSO_2)_2N$) as a lithium salt was added to 1 g of the obtained fine substance of the lithium-containing oxide, and the mixture was further ball-milled for 100 hours. The obtained powder was added to water such that a powder concentration was 42% by mass, and the mixture was subjected to ultrasonic dispersion for 30 minutes. Subsequently, the obtained dispersion liquid was transferred to a glass petri dish, and dried at 120°C for 2 hours in the air to obtain a film of solid electrolyte. Subsequently, the obtained film was peeled off to obtain a powdery solid electrolyte SE1 (solid electrolyte for Example 1-1).

A particle size distribution of the solid electrolyte SE1 was approximately several $\mu$m to 30 $\mu$m, and a median diameter (D50) thereof was 7.8 $\mu$m. The particle size distribution of the solid electrolyte was calculated by acquiring a particle image by a flow-type particle image analysis method and creating a histogram (particle size distribution) of the particle size of the solid electrolyte. The above-described particle size corresponds to a circle-equivalent diameter.

In a case where the powder of the solid electrolyte SE1 was analyzed, it was confirmed that the powder had the above-described X-ray diffraction characteristics and was in an amorphous state. In addition, in a case where the ion conductivity was measured by the above-described method, the ion conductivity was $1.5 \times 10^{-4}$ S/cm at 27°C. The element composition was the same as that of Reference Example 1.

2. Preparation of active material

Powdery $LiCoO_2$ crystals (LCO powder) (positive electrode active material) were classified to have a median diameter shown in the table below, and used as an active material AC.

The active material AC had a particle size distribution of approximately several $\mu$m to 20 $\mu$m, and a median diameter of 7.3 $\mu$m. The particle size distribution of the active material AC was measured using a laser diffraction/scattering-type particle size distribution analyzer (manufactured by Horiba, Ltd., LA-920).

3. Preparation of electrode composition (slurry)

5 g of the active material AC, 4.5 g of the solid electrolyte SE1, 4.0 g of a carbon nanotube (CNT) dispersion liquid (solid content: 12.5% by mass) (manufactured by KJ Special Paper Co., Ltd.), and 0.5 g of water were put into a container, and the mixture was stirred using a self-rotation type mixer (manufactured by THINKY CORPORATION, product name: Bubbles Eliminator Ren Taro ARE310) under conditions of a rotation speed of 2,000 rpm, a revolution speed of 800 rpm, and 30 minutes to obtain a slurry SL-1 as an electrode composition, having a solid content of 71.5% by mass.

(Examples 1-2 to 1-6 and Comparative Examples 1-1 to 1-3)

Solid electrolytes and active materials were obtained in the same manner as in Example 1-1, except that the ball milling conditions were changed such that the median diameter of the solid electrolyte was a median diameter shown in the table below, and an active material having a median diameter shown in the table below was used as the active material; and these were mixed in the same manner as in Example 1-1 to obtain each slurry.

(Examples 2-1 to 2-6 and Comparative Examples 2-1 to 2-3)

Solid electrolytes and active materials were obtained in the same manner as in Example 1-1, except that the active material was changed from the LCO powder to $Li_4Ti_5O_{12}$ (LTO powder) (negative electrode active material), the ball milling conditions were changed such that the median diameter of the solid electrolyte was a median diameter shown in the table below, and an active material having a median diameter shown in the table below was used as the active material; and these were mixed in the same manner as in Example 1-1 to obtain each slurry.

(Examples 3-1 to 3-5 and Comparative Examples 3-1 to 3-3)

Solid electrolytes and active materials were obtained in the same manner as in Example 1-1, except that the active material was changed from the LCO powder to $LiMn_2O_4$ (LMO powder) (positive electrode active material), the ball milling conditions were changed such that the median diameter of the solid electrolyte was a median diameter shown in the table below, and an active material having a median diameter shown in the table below was used as the active material; and these were mixed in the same manner as in Example 1-1 to obtain each slurry.

(Examples 4-1 to 4-5 and Comparative Examples 4-1 to 4-3)

Solid electrolytes and active materials were obtained in the same manner as in Example 1-1, except that the active material was changed from the LCO powder to $LiNi_{1/3}Mn_{1/3}Co_{1/3}O_2$ (NMC powder) (positive electrode active material), the ball milling conditions were changed such that the median diameter of the solid electrolyte was a median diameter shown in the table below, and an active material having a median diameter shown in the table below was used as the active material; and these were mixed in the same manner as in Example 1-1 to obtain each slurry.

(Evaluation of slurry concentration)

In the present test, suitability for increasing the concentration of the electrode composition (slurry) was evaluated by the maximum concentration of solid contents, at which the slurry could be prepared without forming an aggregate of 50 μm or more.

In the test, a slurry was prepared by the following procedure using the active material and the solid electrolyte having the median diameters shown in the table below, which were used in each of Examples and Comparative Examples.

5 g of the active material, 4.5 g of the solid electrolyte, and water were put into a container, in which the amount of water was adjusted so that the slurry concentration was a predetermined value, and stirring was performed using a self-rotation and revolution type mixer (manufactured by THINKY CORPORATION, product name: Bubbles Eliminator Ren Taro ARE310) under conditions of a rotation speed of 2,000 rpm, a revolution speed of 800 rpm, and 30 minutes to obtain a slurry.

The obtained slurry was poured into a deep groove of a grind gauge (manufactured by Sansyo Co., Ltd., trade name: Grind gauge, maximum depth of groove: 100 μm, scale interval: 10 μm), a scraper was brought into contact with the grind gauge perpendicularly and pulled toward a shallow groove to spread the slurry, and a state of the spread slurry was visually observed to check whether or not a streak was observed at a scale of 50 μm or more (a side where the groove was deeper than the position of the scale of 50 μm). The concentration of solid contents in the slurry was gradually increased, and the maximum concentration at which the streaks were not observed (concentration immediately before the concentration at which streaks were observed at a scale of 50 μm or more) was adopted as an evaluation value and evaluated according to the following evaluation standard.

--Evaluation standard--

A: 73% by mass or more
B: 70% by mass or more and less than 73% by mass
C: 65% by mass or more and less than 70% by mass
D: 60% by mass or more and less than 65% by mass

(Evaluation of electrode bending)

Flexibility of the electrode sheet was evaluated as follows by a bending resistance test (according to JIS K 5600-5-1: 1999) using a mandrel tester.

Each of the slurries (solid content: 71.5% by mass) produced in Examples and Comparative Examples described above was applied onto a collector foil (on an A4-sized Al foil having a thickness of 20 μm) using a tabletop coating machine such that the amount of the mixture (solid content) was 6 mg/cm$^2$, and stored in a desiccator having a relative humidity of 5% or less for 12 hours to be dried, thereby producing an electrode laminate (active material layer/Al collector layer, before pressurization).

The obtained electrode laminate was subjected to a pressurization treatment at 5 MPa by pressing with a flat plate press machine, thereby obtaining an electrode sheet.

A strip-shaped test piece having a width of 10 mm and a length of 100 mm was cut out from each electrode sheet. A surface of the test piece on the active material layer side was set on a side opposite to a mandrel (the collector was on the mandrel side) and a width direction of the test piece was set to be parallel to an axis of the mandrel, and then the test piece was bent by 180° (once) along the outer peripheral surface of the mandrel, and it was visually observed whether or not cracking and/or peeling occurred in the active material layer. In the test, first, a mandrel having a diameter of 32 mm was used, and in a case where neither cracking nor peeling occurred, the diameter (unit: mm) of the mandrel was gradually reduced to 32, 25, 20, 16, 12, 10, 8, 6, 5, 4, 3, and 2, and the diameter of the mandrel at which cracking and/or peeling occurred for the first time was recorded. A diameter (defect generation diameter) at which the cracking and/or peeling first occurred was applied to the following evaluation standard to evaluate the flexibility. In the present invention, as the defect generation diameter was smaller, the electrode sheet was more flexible.

--Evaluation standard--

A: 3 mm or less
B: 4 mm or more and 6 mm or less
C: 8 mm or more and 10 mm or less
D: 12 mm or more

(Evaluation of cycle characteristics and resistance)

An all-solid-state secondary battery was produced using each slurry obtained above (Examples 20-01 to 20-06 and Comparative Examples 20-01 and 20-02), and cycle characteristics and resistance thereof were evaluated as follows. The details will be described below.

1. Production of all-solid-state secondary battery

1) Preparation of positive electrode laminate

As a positive electrode laminate, each of the slurries (the slurries produced in Examples 1-1 to 1-5 and Comparative Examples 1-1 and 1-2 (solid content: 71.5% by mass)) shown in Table 10 was applied onto a collector foil (on an A4-sized Al foil having a thickness of 20 $\mu$m) using a desktop coating machine such that the amount of the mixture (solid content) was 3 mg/cm$^2$, and stored in a desiccator having a relative humidity of 5% or less for 12 hours to be dried, thereby preparing a positive electrode laminate (positive electrode active material layer/Al collector layer, before pressurization).

2) Production of negative electrode laminate

As a negative electrode active material layer, each of the slurries (the slurries produced in Examples 2-1 to 2-6 and Comparative Examples 2-1 and 2-3 (solid content: 71.5% by mass)) shown in Table 10 was applied onto a collector foil (on an A4-sized Al foil having a thickness of 20 $\mu$m) using a desktop coating machine such that the amount of the mixture (solid content) was 2 mg/cm$^2$, and stored in a desiccator having a relative humidity of 5% or less for 12 hours to be dried, thereby preparing a negative electrode laminate (negative electrode active material layer/Al collector layer, before pressurization).

3) Production of all-solid-state secondary battery

A battery was produced using an all-solid-state battery evaluation cell (KP-SolidCell, manufactured by Hohsen Corp.).

Specifically, 80 mg of the solid electrolyte SE1 obtained above was put into a battery protection tube having a diameter of 10 mm, and pressurized at 60 MPa to form a solid electrolyte layer. The positive electrode laminate obtained above was disposed on one surface of the solid electrolyte layer and the negative electrode laminate obtained above was disposed on the other surface of the solid electrolyte layer on the active material layer side so as to sandwich the solid electrolyte layer, and the laminate was sealed while being pressurized at 60 MPa, thereby producing an all-solid-state battery evaluation cell (all-solid-state secondary battery). The all-solid-state secondary battery included a positive electrode active material layer and a negative electrode active material layer, which were formed by subjecting each electrode composition layer to a pressurization treatment, in addition to the solid electrolyte layer.

2. Cycle characteristic test

The all-solid-state battery evaluation cell produced as described above was subjected to a charging and discharging test using an ABE 1024-5V 0.1A-4 charging and discharging test device (product name, manufactured by Electro Field Co., Ltd.) to evaluate the cycle characteristics. The details are as follows.

The all-solid-state battery evaluation cell was initialized by performing charging and discharging under the following condition 1A.

(Condition 1A)

| | | |
|---|---|---|
| Charging | constant current 0.1 C, 2.65 V | termination |
| Discharging | constant current 0.1 C, 1.5 V | termination |

The above-described operation was repeated three times.
The all-solid-state battery evaluation cell after the initialization was charged and discharged in the order of the following condition 2A-1, the condition 2A-2, and the condition 2A-3.

(Condition 2A-1)

| | | |
|---|---|---|
| Charging | constant current and constant voltage 0.3 C, 2.65 V - 0.1 C | termination |
| Discharging | constant current 0.1 C, 1.5 V | termination |

(Condition 2A-2)

| | | |
|---|---|---|
| Charging | constant current and constant voltage 0.3 C, 2.65 V - 0.1 C | termination |
| Discharging | constant current 0.3 C, 1.5 V | termination |

The above-described charging and discharging were performed as one cycle, and the charging and discharging are performed for 29 cycles.

(Condition 2A-3)

| | | |
|---|---|---|
| Charging | constant current and constant voltage 0.3 C, 2.65 V - 0.1 C | termination |
| Discharging | constant current 0.1 C, 1.5 V | termination |

A discharge capacity retention rate A was evaluated by the following evaluation standard, in which the discharge capacity retention rate A (%) = (Discharge capacity under 2A-3)/(Discharge capacity under condition 2A-1) $\times$ 100. As the discharge capacity retention rate A was higher, the cycle characteristics was excellent (the cycle life was longer).

--Evaluation standard--

A: 90% or more
B: 85% or more and less than 90%
C: 80% or more and less than 85%
D: 70% or more and less than 80%
E: 50% or more and less than 70%
F: less than 50%

3. Resistance test of battery

The all-solid-state battery evaluation cell produced as described above was subjected to a charging and discharging test using an ABE 1024-5V 0.1A-4 charging and discharging test device (product name, manufactured by Electro Field Co., Ltd.) to evaluate the resistance of the battery. The details are as follows.
The all-solid-state battery evaluation cell was initialized by performing charging and discharging under the following condition 1B.

(Condition 1B)

| Charging | constant current 0.1 C, 2.65 V | termination |
|---|---|---|
| Discharging | constant current 0.1 C, 1.5 V | termination |

The above-described operation was repeated three times.
The all-solid-state battery evaluation cell after the initialization was charged and discharged under the following conditions 2B and 3B.

(Condition 2B)

| Charging | constant current and constant voltage1 C, 2.65 V - 0.1 C | termination |
|---|---|---|
| Discharging | constant current 1 C, 1.5 V | termination |

(Condition 3B)

| Charging | constant current and constant voltage1 C, 2.65 V - 0.1 C | termination |
|---|---|---|
| Discharging | constant current 2 C, 1.5 V | termination |

A discharge capacity retention rate B was evaluated by the following evaluation standard, in which the discharge capacity retention rate B (%) = (Discharge capacity under condition 3B)/(Discharge capacity under condition 2B) × 100. As the discharge capacity retention rate B was higher, the resistance of the battery was lower.

--Evaluation standard--

A: 96% or more

B: 94% or more and less than 96%

C: 92% or more and less than 94%

D: 87% or more and less than 92%

E: 80% or more and less than 87%

F: less than 80%

[Table 6]

| | Median diameter (N) of solid electrolyte | Median diameter (M) of positive electrode active material (LCO) | M/N | Concentration of slurry | Electrode bending |
|---|---|---|---|---|---|
| Example 1-1 | 7.8 | 7.3 | 0.94 | B | A |
| Example 1-2 | 15.2 | 5.1 | 0.34 | A | B |
| Example 1-3 | 7.8 | 8.5 | 1.09 | A | B |
| Example 1-4 | 7.8 | 5.1 | 0.65 | A | A |
| Example 1-5 | 5.2 | 5.1 | 0.98 | B | A |
| Example 1-6 | 15.2 | 8.5 | 0.56 | A | A |
| Comparative Example 1-1 | 1.8 | 5.1 | 2.83 | D | D |
| Comparative Example 1-2 | 2.2 | 7.3 | 3.32 | D | C |
| Comparative Example 1-3 | 2.2 | 10.5 | 4.77 | D | D |

[Table 7]

| | Median diameter (N) of solid electrolyte | Median diameter (M) of negative electrode active material (LTO) | M/N | Concentration of slurry | Electrode bending |
|---|---|---|---|---|---|
| Example 2-1 | 7.8 | 0.8 | 0.10 | B | A |
| Example 2-2 | 15.2 | 0.9 | 0.06 | B | B |
| Example 2-3 | 7.8 | 2.2 | 0.28 | A | B |
| Example 2-4 | 7.8 | 5.2 | 0.67 | A | A |
| Example 2-5 | 5.2 | 5.2 | 1.00 | B | B |
| Example 2-6 | 15.2 | 5.2 | 0.34 | A | B |
| Comparative Example 2-1 | 2.2 | 5.2 | 2.36 | D | B |
| Comparative Example 2-2 | 1.8 | 5.2 | 2.89 | D | B |
| Comparative Example 2-3 | 0.7 | 5.2 | 7.43 | D | D |

[Table 8]

| | Median diameter (N) of solid electrolyte | Median diameter (M) of positive electrode active material (LMO) | M/N | Concentration of slurry | Electrode bending |
|---|---|---|---|---|---|
| Example 3-1 | 15.2 | 13.1 | 0.86 | B | A |
| Example 3-2 | 21.3 | 13.1 | 0.62 | A | A |
| Example 3-3 | 7.8 | 5.2 | 0.67 | B | A |
| Example 3-4 | 10.3 | 5.2 | 0.50 | A | B |
| Example 3-5 | 15.2 | 5.2 | 0.34 | A | B |
| Comparative Example 3-1 | 2.2 | 13.1 | 5.95 | D | D |

(continued)

|  | Median diameter (N) of solid electrolyte | Median diameter (M) of positive electrode active material (LMO) | M/N | Concentration of slurry | Electrode bending |
|---|---|---|---|---|---|
| Comparative Example 3-2 | 1.8 | 5.2 | 2.89 | D | D |
| Comparative Example 3-3 | 2.2 | 5.2 | 2.36 | D | D |

[Table 9]

|  | Median diameter (N) of solid electrolyte | Median diameter (M) of negative electrode active material (NMC) | M/N | Concentration of slurry | Electrode bending |
|---|---|---|---|---|---|
| Example 4-1 | 10.3 | 2.3 | 0.86 | A | B |
| Example 4-2 | 15.2 | 2.3 | 0.62 | A | C |
| Example 4-3 | 5.2 | 4.9 | 0.67 | B | B |
| Example 4-4 | 7.8 | 4.9 | 0.50 | A | A |
| Example 4-5 | 5.2 | 2.3 | 0.34 | A | B |
| Comparative Example 4-1 | 0.5 | 4.9 | 5.95 | D | D |
| Comparative Example 4-2 | 0.7 | 1.0 | 2.89 | D | C |
| Comparative Example 4-3 | 0.9 | 2.3 | 2.36 | C | C |

<Note to table>

In Tables 6 to 9, the unit of the median diameter of each solid electrolyte and each active material is "$\mu$m".

[Table 10]

| Battery | Positive electrode layer | Negative electrode layer | Evaluation of resistance | Cycle characteristics |
|---|---|---|---|---|
| Example 20-01 | Example 1-1 | Example 2-6 | B | B |
| Example 20-02 | Example 1-2 | Example 2-2 | B | B |
| Example 20-03 | Example 1-5 | Example 2-3 | A | B |
| Example 20-04 | Example 1-3 | Example 2-5 | B | C |
| Example 20-05 | Example 1-4 | Example 2-4 | A | A |
| Example 20-06 | Example 1-5 | Example 2-1 | B | A |
| Comparative Example 20-01 | Comparative Example 1-1 | Comparative Example 2-1 | E | E |
| Comparative Example 20-02 | Comparative Example 1-2 | Comparative Example 2-3 | F | F |

As shown in Tables 6 to 9, in a case where the median diameter M of the active material and the median diameter N of the solid electrolyte in the electrode composition did not satisfy $0.05 \leq M/N < 1.2$ specified in the present invention, an aggregate of 50 $\mu$m or more was formed in an amount of less than 70% by mass of the solid contents in the electrode composition. In addition, the electrode sheet having an active material layer formed by setting the solid content of the electrode composition to 71.5% by mass had deteriorated flexibility.

On the other hand, by controlling the ratio of the median diameter of the active material to the median diameter of the solid electrolyte in the electrode composition within the range specified in the present invention, the solid content in the electrode composition could be increased to 70% by mass or more without generating an aggregate of 50 μm or more. It is considered that the affinity between the solid electrolyte surface and the dispersion medium was increased due to the action of water contained in the solid electrolyte, and thus particles of the solid electrolyte were not likely to be precipitated. Furthermore, the electrode sheet having an active material layer formed by setting the concentration of solid contents of the electrode composition to 71.5% by mass exhibited excellent flexibility.

In addition, as shown in Table 10, the secondary battery having the active material layer formed of the high-concentration electrode composition in which the ratio of the median diameters was not within the range specified in the present invention had a low discharge capacity ratio between the 1C discharge and the 2C discharge, was relatively high in resistance, and was deteriorated in cycle characteristics.

On the other hand, the secondary battery having the active material layer formed of the high-concentration electrode composition in which the ratio of the median diameters was in the range specified in the present invention had a relatively low resistance and excellent cycle characteristics.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2022-089968 filed in Japan on June 1, 2022, the contents of which are incorporated herein by reference, as a part of the description of the present specification.

Explanation of References

1: negative electrode collector
2: negative electrode active material layer
3: solid electrolyte layer
4: positive electrode active material layer
5: positive electrode collector
6: operation portion
10: all-solid-state lithium ion secondary battery

**Claims**

1. **An electrode** composition for an all-solid-state secondary battery, comprising:

   an amorphous solid electrolyte; and
   an active material,
   wherein the solid electrolyte contains a metal-containing oxide containing at least one of an alkali metal element or an alkaline earth metal element and an oxygen element, at least one metal salt of an alkali metal salt or an alkaline earth metal salt, and water, and
   a ratio of a median diameter M of the active material to a median diameter N of the solid electrolyte is $0.05 \leq M/N < 1.2$.

2. The electrode composition for an all-solid-state secondary battery according to claim 1,

   wherein the metal-containing oxide is a lithium-containing oxide containing Li, B, and O, and
   the metal salt is a lithium salt.

3. The electrode composition for an all-solid-state secondary battery according to claim 1 or 2,
   wherein the median diameter N of the solid electrolyte is 5 to 50 μm.

4. The electrode composition for an all-solid-state secondary battery according to any one of claims 1 to 3,
   wherein, in the electrode composition for an all-solid-state secondary battery, a ratio of a content of the active material and a content of the solid electrolyte is the solid electrolyte:the active material = 20:80 to 80:20 in terms of a mass ratio.

5. The electrode composition for an all-solid-state secondary battery according to any one of claims 1 to 4,
   wherein, in the solid electrolyte, a value of a ratio of a content of the water to a content of the metal-containing oxide is 1 to 12 in terms of a molar ratio.

6. The electrode composition for an all-solid-state secondary battery according to any one of claims 1 to 5, wherein, in the solid electrolyte, a value of a ratio of a content of the metal salt to a content of the metal-containing oxide is 0.001 to 1.5 in terms of a molar ratio.

7. An electrode sheet for an all-solid-state secondary battery, comprising:
an active material layer formed of the electrode composition for an all-solid-state secondary battery according to any one of claims 1 to 6.

8. An all-solid-state secondary battery comprising, in the following order:

    a positive electrode active material layer;
    a solid electrolyte layer; and
    a negative electrode active material layer,
    wherein at least one of the positive electrode active material layer or the negative electrode active material layer is an active material layer formed of the electrode composition for an all-solid-state secondary battery according to any one of claims 1 to 6.

9. A manufacturing method of an electrode sheet for an all-solid-state secondary battery, comprising:
forming an active material layer using the electrode composition for an all-solid-state secondary battery according to any one of claims 1 to 6.

10. A manufacturing method of an all-solid-state secondary battery in which a positive electrode active material layer, a solid electrolyte layer, and a negative electrode active material layer are arranged in this order, the manufacturing method comprising:
forming at least one of the positive electrode active material layer or the negative electrode active material layer using the electrode composition for an all-solid-state secondary battery according to any one of claims 1 to 6.

# FIG. 1

# FIG. 2

## FIG. 3

## FIG. 4

# FIG. 5

| | | | | |
|---|---|---|---|---|
| 100 | 50 | 0 | -50 | -100 |

| | | | | |
|---|---|---|---|---|
| 100 | 50 | 0 | -50 | -100 |

# FIG. 6

| | | | | |
|---|---|---|---|---|
| 100 | 50 | 0 | -50 | -100 |

# FIG. 7

| | | | | |
|---|---|---|---|---|
| 100 | 50 | 0 | -50 | -100 |

## FIG. 8

RAMAN INTENSITY

$R^2 = 0.9952$

RAMAN SHIFT ($cm^{-1}$)

## FIG. 9

RAMAN INTENSITY

RAMAN SHIFT ($cm^{-1}$)

## FIG. 10

## FIG. 11

EP 4 535 448 A1

# INTERNATIONAL SEARCH REPORT

International application No.

**PCT/JP2023/020303**

## A. CLASSIFICATION OF SUBJECT MATTER

*H01M 4/13*(2010.01)i; *H01M 4/62*(2006.01)i; *H01M 10/052*(2010.01)i; *H01M 10/0562*(2010.01)i
FI: H01M4/13; H01M4/62 Z; H01M10/052; H01M10/0562

According to International Patent Classification (IPC) or to both national classification and IPC

## B. FIELDS SEARCHED

Minimum documentation searched (classification system followed by classification symbols)

H01M4/13; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| P, A | WO 2022/118870 A2 (FUJIFILM CORP., TOKYO INSTITUTE OF TECHNOLOGY) 09 June 2022 (2022-06-09) | 1-10 |
| A | WO 2021/193204 A1 (FUJIFILM CORP., TOKYO INSTITUTE OF TECHNOLOGY) 30 September 2021 (2021-09-30) | 1-10 |
| A | WO 2021/145431 A1 (SUMITOMO CHEMICAL CO., LTD.) 22 July 2021 (2021-07-22) | 1-10 |
| A | WO 2020/050269 A1 (MITSUI MINING & SMELTING CO., LTD.) 12 March 2020 (2020-03-12) | 1-10 |

☐ Further documents are listed in the continuation of Box C.       ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

49

**INTERNATIONAL SEARCH REPORT**
Information on patent family members

International application No.

**PCT/JP2023/020303**

| Patent document cited in search report | | | Publication date (day/month/year) | Patent family member(s) | | | Publication date (day/month/year) |
|---|---|---|---|---|---|---|---|
| WO | 2022/118870 | A2 | 09 June 2022 | (Family: none) | | | |
| WO | 2021/193204 | A1 | 30 September 2021 | US | 2023/0018477 | A1 | |
| | | | | CN | 115335923 | A | |
| WO | 2021/145431 | A1 | 22 July 2021 | JP | 2021-114407 | A | |
| | | | | JP | 6780140 | B1 | |
| | | | | US | 2023/0048124 | A1 | |
| | | | | EP | 4091989 | A1 | |
| | | | | CN | 115023831 | A | |
| | | | | KR | 10-2022-0130112 | A | |
| WO | 2020/050269 | A1 | 12 March 2020 | US | 2021/0020984 | A1 | |
| | | | | EP | 3754774 | A1 | |
| | | | | CN | 111448702 | A | |
| | | | | KR | 10-2020-0093682 | A | |
| | | | | CN | 113428880 | A | |

Form PCT/ISA/210 (patent family annex) (January 2015)

**EP 4 535 448 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018052755 A
- WO 2021193204 A
- JP 2015022960 A
- JP 62022066 A
- JP S62022066 A
- JP 2006856 A
- JP H2006856 A
- JP 3045473 A
- JP H3045473 A
- JP 5090844 A
- JP H5090844 A
- JP 6004516 A
- JP H6004516 A
- JP 2022089968 A